(19) Europäisches Patentamt / European Patent Office / Office européen des brevets

(11) **EP 4 219 091 A1**

(12) **EUROPEAN PATENT APPLICATION**
published in accordance with Art. 153(4) EPC

(43) Date of publication:
**02.08.2023 Bulletin 2023/31**

(21) Application number: **20955247.0**

(22) Date of filing: **25.09.2020**

(51) International Patent Classification (IPC):
**B25J 13/00** (2006.01)

(52) Cooperative Patent Classification (CPC):
**B25J 9/1656; B25J 13/00; G05B 19/42;**
G05B 2219/33006; G05B 2219/35472;
G05B 2219/40153

(86) International application number:
**PCT/JP2020/036383**

(87) International publication number:
**WO 2022/064653 (31.03.2022 Gazette 2022/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NEC Corporation
108-8001 Tokyo (JP)**

(72) Inventors:
• **ICHIEN, Masumi
Tokyo 108-8001 (JP)**
• **KAMI, Nobuharu
Tokyo 108-8001 (JP)**
• **WAKAYAMA, Hisaya
Tokyo 108-8001 (JP)**
• **OGAWA, Masatsugu
Tokyo 108-8001 (JP)**

(74) Representative: **Betten & Resch
Patent- und Rechtsanwälte PartGmbB
Maximiliansplatz 14
80333 München (DE)**

(54) **CONTROL DEVICE, CONTROL METHOD, AND STORAGE MEDIUM**

(57)    A control device 1X mainly includes an operation sequence generation means 16X, a first robot control means 171X, a switching determination means 18X, and a second robot control means 172X. The operation sequence generation means 16X is configured to generate an operation sequence of a robot. The first robot control means 171X is configured to perform a first robot control that is a control of the robot based on the operation sequence. The switching determination means 18X is configured, during execution of the first robot control, to determine, based on the operation sequence, whether or not to switch to a second robot control, which is a control of the robot based on an external input. The second robot control means 172X is configured, if it is determined by the switching determination means 18X that the switching is required, to perform the second robot control.

FIG. 11

1X : CONTROL DEVICE

16X OPERATION SEQUENCE GENERATION MEANS

171X FIRST ROBOT CONTROL MEANS

18X SWITCHING DETERMINATION MEANS

172X SECOND ROBOT CONTROL MEANS

EP 4 219 091 A1

**Description**

TECHNICAL FIELD

The present disclosure relates to the technical field of a control device, a control method, and a storage medium for controlling the operation of a robot.

BACKGROUND ART

There is proposed a control method for controlling a robot to execute a task when a task to be executed by the robot is given. For example, Patent Literature 1 discloses a system which is equipped with an automatic mode and a cooperative mode, and in an automatic mode, automatically controls the robot according to a sequence or a program, and in a cooperative mode, manually controls the robot by an on-hand operation panel by an operator. Further, Patent Literature 2 discloses a system for automatically selecting the operation mode at the time of determining that the task execution by the robot has failed when the failure of the motion planning (operation plan) of the robot is detected.

CITATION LIST

PATENT LITERATURE

Patent Literature 1: JP2011-093062A
Patent Literature 2: JP2016-068161A

SUMMARY

PROBLEM TO BE SOLVED

For a system in which a robot performs a task, it is desirable that the robot can autonomously perform all of the operations necessary to complete the task, but there are cases in which manipulation by an operator is required for some of the operations. In such cases, it is necessary to cause the robot to operate properly and smoothly so that the task is completed.
In view of the above-described issue, it is therefore an example object of the present disclosure to provide a control device, a control method, and a storage medium capable of suitably controlling a robot.

MEANS FOR SOLVING THE PROBLEM

In one mode of the control device, there is provided a control device including:

an operation sequence generation means configured to generate an operation sequence of a robot;
a first robot control means configured to perform a first robot control that is a control of the robot based on the operation sequence;
a switching determination means configured, during execution of the first robot control, to determine, based on the operation sequence, whether or not to switch to a second robot control which is a control of the robot based on an external input; and
a second robot control means configured, if it is determined that the switching is required, to perform the second robot control.

In one mode of the control method, there is provided a control method executed by a computer, the control method including:

generating an operation sequence of a robot;
performing a first robot control that is a control of the robot based on the operation sequence;
during execution of the first robot control, determining, based on the operation sequence, whether or not to switch to a second robot control which is a control of the robot based on an external input; and
if it is determined that the switching is required, performing the second robot control.

In one mode of the storage medium, there is provided a storage medium storing a program executed by a computer, the program causing the computer to function as:

generate an operation sequence of a robot;
perform a first robot control that is a control of the robot based on the operation sequence;
during execution of the first robot control, determine, based on the operation sequence, whether or not to switch to a second robot control which is a control of the robot based on an external input; and
if it is determined that the switching is required, perform the second robot control.

EFFECT

An example advantage according to the present invention is to suitably control a robot by smoothly switching the robot control.

BRIEF DESCRIPTION OF THE DRAWINGS

FIG. 1 shows a configuration of a robot control system in a first example embodiment.
FIG. 2 shows a hardware configuration of a robot controller;
FIG. 3 shows an example of a data structure of application information.
FIG. 4 shows an example of a functional block of the robot controller.
FIG. 5 shows an example of a functional block of an operation sequence generation unit.
FIG. 6 shows a bird's-eye view of the workspace when the objective task is a pick-and-place.
FIG. 7 shows a display example of the task designation screen image for designating the objective task.
FIG. 8 shows a first display example of the external input support screen image.
FIG. 9 shows a second display example of the external input support screen image.
FIG. 10 is an example of a flowchart showing an outline of a robot control process which the robot controller executes in the first example embodiment.
FIG. 11 is a schematic configuration diagram of the control device in a second example embodiment.
FIG. 12 shows an example of a flowchart showing a processing procedure which the control device executes.

EXAMPLE EMBODIMENTS

Hereinafter, example embodiments regarding a control device, a control method, and a storage medium will be described with reference to the drawings.

<First Example Embodiment>

(1) System Configuration

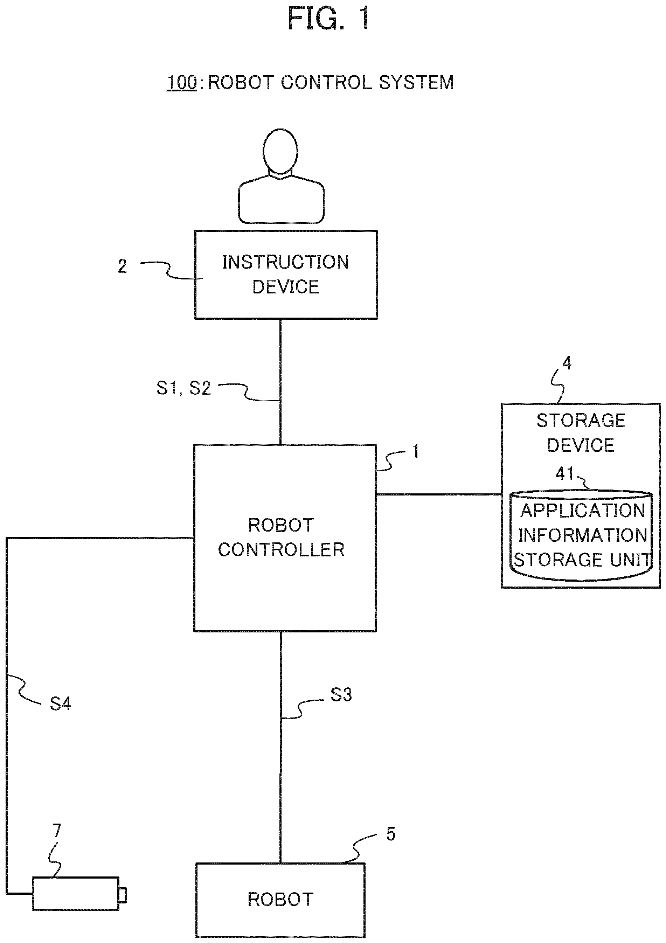

FIG. 1 shows a configuration of a robot control system 100 according to the first example embodiment. The robot control system 100 mainly includes a robot controller 1, an instruction device 2, a storage device 4, a robot 5, and a measurement device 7.
When a task (also referred to as "objective task") to be performed by the robot 5 is specified, the robot controller 1 converts the objective task into a time step sequence of simple tasks each of which the robot 5 can accept, and controls the robot 5 based on the generated sequence.
In addition, the robot controller 1 performs data communication with the instruction device 2, the storage device 4, the robot 5, and the measurement device 7 through a communication network or by wireless or wired direct communication. For example, the robot controller 1 receives, from the instruction device 2, an input signal "S1" relating to the designation of the objective task or the operation command of the robot 5 or the like. Further, the robot controller 1 causes the instruction device 2 to perform predetermined display or audio output by transmitting an output control signal "S2" to the instruction device 2. Furthermore, the robot controller 1 transmits a control signal "S3" relating to the control of the robot 5 to the robot 5. Further, the robot controller 1 receives a measurement signal "S4" from the measurement device 7.
The instruction device 2 is a device configured to receive instructions from the operator to the robot 5. The instruction device 2 performs a predetermined display or audio output based on the output control signal S2 supplied from the robot controller 1, or supplies the robot controller 1 with an input signal S1 generated based on the input from the operator. The instruction device 2 may be a tablet terminal equipped with an input unit and a display unit or may be a stationary personal computer.

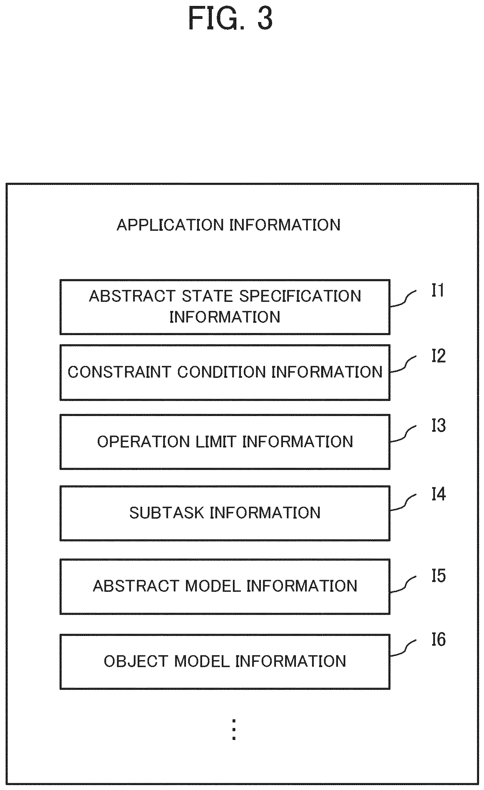

The storage device 4 includes an application information storage unit 41. The application information storage unit 41 stores application information necessary for generating an operation sequence, which is a sequence of operations to be executed by the robot 5, from the objective task. Details of the application information will be described later with reference to FIG. 3. The storage device 4 may be an external storage device, such as a hard disk, connected or embedded in the robot controller 1, or may be a storage medium, such as a flash memory. The storage device 4 may be a server device that performs data communication with the robot controller 1 via a communication network. In this case, the storage device 4 may be configured by a plurality of server devices.

The robot 5 performs tasks relating to the objective task on the basis of control signal S3 supplied from the robot controller 1. Examples of the robot 5 include a robot used in any kind of a factory such as a food factory and an assembly factory, and a robot configured to operate in logistics sites. The robot 5 may be a vertical articulated robot, a horizontal articulated robot, or any other type of a robot. The robot 5 may supply a state signal indicating the state of the robot 5 to the robot controller 1. The state signal may be an output signal from one or more sensors for detecting the state (e.g., position and angle) of the entire robot 5 or specific parts such as a joint, or may be a signal indicating the progress of the operation sequence of the robot 5 generated by a control unit of the robot 5.

The measurement device 7 is one or more sensors to detect a state of the workspace in which an objective task is performed such as a camera, a range sensor, a sonar, and any combination thereof. In the present example embodiment, the measurement device 7 is assumed to include at least one camera configured to image the workspace of the robot 5. The measurement device 7 supplies the generated measurement signal S4 to the robot controller 1. The measurement device 7 may be a self-propelled or flying sensor (including a drone) that moves in the workspace. The measurement device 7 may also include one or more sensors provided on the robot 5, one or more sensors provided on other objects existing in the workspace, and the like. The measurement device 7 may also include one or more sensors that detect sound in the workspace. As such, the measurement device 7 may include a variety of sensors that detect the state of the workspace, and may include sensors located anywhere.

The configuration of the robot control system 100 shown in FIG. 1 is an example, and various changes may be made to the configuration. For example, the robot 5 may be plural robots, or may include plural targets to be controlled to operate independently such as robot arms. Even in these cases, the robot controller 1 generates, based on the objective task, an operation sequence to be executed with respect to each robot 5 (or each target to be controlled), and transmits the control signal S3 based on the operation sequence to each robot 5. Further, the robot 5 may perform cooperative work with other robots, workers, or machine tools that operate in the workspace. The measurement device 7 may be a part of the robot 5. The instruction device 2 may be incorporated into the robot controller 1. Further, the robot controller 1 may be configured by a plurality of devices. In this case, the plurality of devices constituting the robot controller 1 exchange information necessary to execute the process assigned in advance with one another. Further, the robot controller 1 and the robot 5 may be integrally configured.

(2) Hardware Configuration

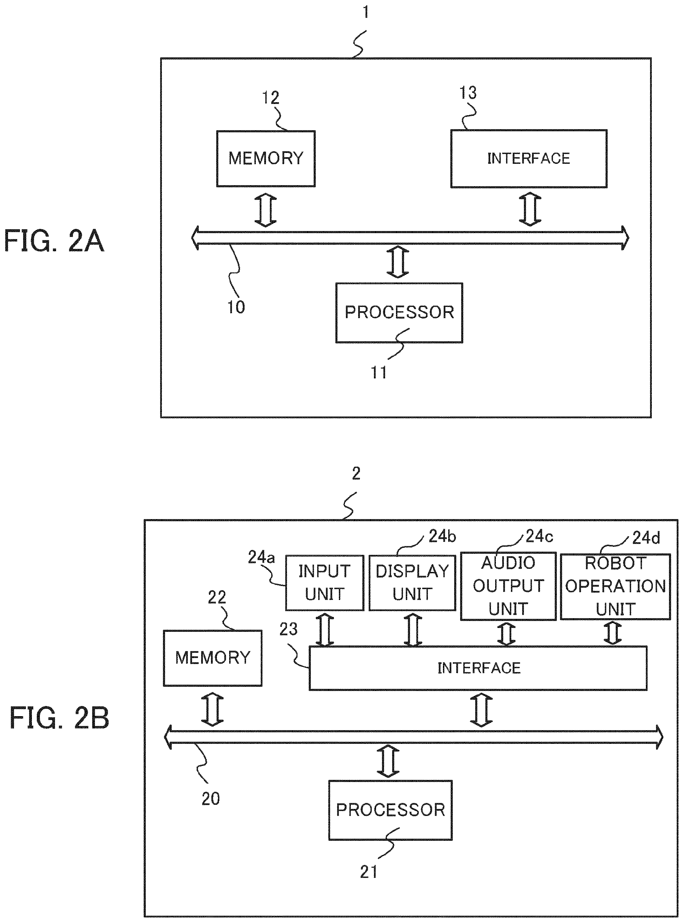

FIG. 2A shows a hardware configuration of the robot controller 1. The robot controller 1 includes a processor 11, a memory 12, and an interface 13 as hardware. The processor 11, memory 12 and interface 13 are connected to one another via a data bus 10.

The processor 11 functions as a controller (arithmetic unit) for performing overall control of the robot controller 1 by executing a program stored in the memory 12. Examples of the processor 11 include a CPU (Central Processing Unit), a GPU (Graphics Processing Unit), and a TPU (Tensor Processing Unit). The processor 11 may be configured by a plurality of processors. The processor 11 is an example of a computer.

The memory 12 includes a variety of volatile and non-volatile memories, such as a RAM (Random Access Memory), a ROM (Read Only Memory), and a flash memory. Further, in the memory 12, a program for the robot controller 1 to execute a process is stored. A part of the information stored in the memory 12 may be stored by one or more external storage devices (e.g., the storage device 4) capable of communicating with the robot controller 1, or may be stored by a detachable storage medium attached to the robot controller 1.

The interface 13 is one or more interfaces for electrically connecting the robot controller 1 to other devices. Examples of these interfaces include a wireless interface, such as a network adapter, for transmitting and receiving data to and from other devices wirelessly, and a hardware interface, such as cables, for connecting to other devices.

The hardware configuration of the robot controller 1 is not limited to the configuration shown in FIG. 2A. For example, the robot controller 1 may be connected to or incorporate at least one of a display device, an input device, or an audio output device. The robot controller 1 may be configured to include at least one of the instruction device 2 or the storage device 4.

FIG. 2B shows the hardware configuration of the instruction device 2. The instruction device 2 includes, as hardware, a processor 21, a memory 22, an interface 23, an input unit 24a, a display unit 24b, an audio output unit 24c, and a robot operation unit 24d. The processor 21, memory 22 and interface 23 are connected to one another via a data bus 20. Further, the input unit 24a, the display unit 24b, the audio output unit 24c, and the robot operation unit 24d are connected to the interface 23.

The processor 21 executes a predetermined process by executing a program stored in the memory 22. The processor 21 is one or more processors such as a CPU, a GPU. The processor 21 receives a signal generated by the input unit 24a or the robot operation unit 24d through the interface 23 to thereby generate the input signal S1 and transmit the input signal S1 to the robot controller 1 through the interface 23. The processor 21 controls, based on the output control signal S2 received from the robot controller 1 via the interface 23, at least one of the display unit 24b or the audio output unit 24c.

The memory 22 is configured by various volatile memories and non-volatile memories such as a RAM, a ROM, a flash memory, and the like,. Further, the memory 22 stores a program for the instruction device 2 to execute a process.

The interface 23 is one or more interfaces for electrically connecting the instruction device 2 to other devices. Examples of these interfaces include a wireless interface, such as a network adapter, for transmitting and receiving data to and from other devices wirelessly, and a hardware interface, such as a cable, for connecting devices to other devices. The interface 23 also performs interface operations of the input unit 24a, the display unit 24b, the audio output unit 24c, and the robot operation unit 24d. The input unit 24a is an interface configured to receive input from a user, and examples of the input unit 24a include a touch panel, a button, a keyboard, and a voice input device. The display unit 24b displays information under the control of the processor 21 and examples of the display unit 24b include a display and a projector. The audio output unit 24c is a speaker, for example, and performs audio output under the control of the processor 21.

The robot operation unit 24d receives an external input that is an input from a user representing a command directly determining the operation of the robot 5 and generates an input signal S1 that is a signal of the external input. In the present example embodiment, the robot operation unit 24d is used when it is determined that the control of the robot 5 (that is, the manual control of the robot 5) based on the external input is required in execution of the objective task. Here, the robot operation unit 24d may be a robot controller (operation panel) operated by the user during the control of the robot 5 based on the external input, or it may be a robot input system for generating an operation command to the robot 5 in accordance with the movement of the user. The former robot controller includes, for example, various buttons for designating the potion of the robot 5 to be operated and the movement thereof, and an operation bar for designating the movement direction. The latter robotic input system includes various sensors, such as a camera and a mounting sensor, used in a motion capture.

Hereinafter, the control of the robot 5 based on the operation sequence generated by the robot controller 1 (i.e., automatic control of the robot 5) is referred to as "first robot control", and the control of the robot 5 using the robot operation unit 24d (i.e., the control of the robot 5 based on the external input) is referred to as "second robot control".

The hardware configuration of the instruction device 2 is not limited to the configuration shown in FIG.2B. For example, at least one of the input unit 24a, the display unit 24b, the audio output unit 24c, or the robot operation unit 24d may be configured as a separated device configured to electrically connect to the instruction device 2. The instruction device 2 may also be connected to or incorporate various devices such as a camera.

(3) Application Information

Next, a data structure of the application information stored in the application information storage unit 41 will be described.

FIG. 3 shows an example of the data structure of the application information. As shown in FIG. 3, the application information includes abstract state specification information I1, constraint condition information I2, operation limit information I3, subtask information I4, abstract model information I5, and object model information I6.

The abstract state specification information I1 specifies abstract states to be defined in order to generate the subtask sequence. The above-mentioned abstract states are abstract states of objects existing in the workspace, and are defined as propositions to be used in the target logical formula to be described later. For example, the abstract state specification information I1 specifies the abstract states to be defined for each type of objective task.

The constraint condition information I2 indicates constraint conditions of performing the objective task. The constraint condition information I2 indicates, for example, a constraint that the robot 5 (robot arms) must not be in contact with an obstacle when the objective task is pick-and-place, and a constraint that the robot 5 (robot arms) must not be in contact with each other, and the like. The constraint condition information I2 may be information in which the constraint conditions suitable for each type of the objective task are recorded.

The operation limit information I3 is information on the operation limit of the robot 5 to be controlled by the robot controller 1. For example, the operation limit information I3 is information on the upper limit of the speed, acceleration, or the angular velocity of the robot 5. The operation limit information I3 may be information defining the operation limit for each movable portion or joint of the robot 5.

The subtask information I4 indicates information on subtasks is a possible component of the operation sequence. The term "subtask" indicates a task into which the objective task is resolved (broken down) in units which can be accepted by the robot 5 and indicates a segment operation of the robot 5. For example, when the objective task is pick-and-place, the subtask information I4 defines a subtask "reaching" that is the movement of the robot arm 52, and a subtask "grasping" that is the grasping by the robot arm 52. The subtask information I4 may indicate information on subtasks that can be used for each type of objective task.

Further, the subtask information 14 includes information on subtasks (also referred to as "external input specific subtasks") which require operation commands by external input (i.e., which are assumed to be performed under the second robot control). In this case, the subtask information I4 relating to an external input specific subtask includes, for example, identification information (e.g., flag information) indicative of being an external input specific subtask and information indicative of the content of the operation to be performed by the robot 5 as the external input specific subtask.

The abstract model information I5 is information on an abstract model in which the dynamics in the workspace is abstracted. The abstract model is represented by a model in which real dynamics is abstracted by a hybrid system, as will be described later. The abstract model Information I5 includes information indicative of the switching conditions of the dynamics in the above-mentioned hybrid system. Examples of the switching conditions in the case of a pick-and-place, which requires the robot 5 to pick-up and move an object (referred to as "target object") to be worked on by the robot 5 to a predetermined position, include a condition that the target object cannot be moved unless it is gripped by the robot 5. The abstract model information I5 includes information on an abstract model suitable for each type of the objective task.

The object model information I6 is information relating to an object model of each object existing in the workspace to be recognized from the measurement signal S4 generated by the measurement device 7. Examples of the above-mentioned each object include the robot 5, an obstacle, a tool or any other target object handled by the robot 5, a working object other than the robot 5, and the like. For example, the object model information I6 includes: information which is necessary for the robot controller to recognize the type, the position, the posture, the ongoing (currently-executing) operation and the like of the above-described each object; and three-dimensional shape information such as CAD (Computer Aided Design) data for recognizing the three-dimensional shape of the each object. The former information includes the parameters of an inference engine obtained by learning a learning model that is used in a machine learning such as a neural network. For example, the above-mentioned inference engine is learned in advance to output the type, the position, the posture, and the like of an object shown in the image when an image is inputted thereto.

The application information storage unit 41 may store not only the information described above but also various information relating to the generation process of the operation sequence and the generation process of the output control signal S2.

(4) Process Overview

Next, a description will be given of the outline of the process executed by the robot controller 1. Schematically, during the execution of the first robot control, if the robot controller 1 determines, based on the operation sequence, that it is necessary to switch to the second robot control, the robot controller 1 switches the control of the robot 5 to the second robot control. Accordingly, even when the robot controller 1 cannot cope with the objective task only by the automatic control of the robot 5, the robot controller 1 suitably completes the objective task by smoothly switching the control mode of the robot 5.

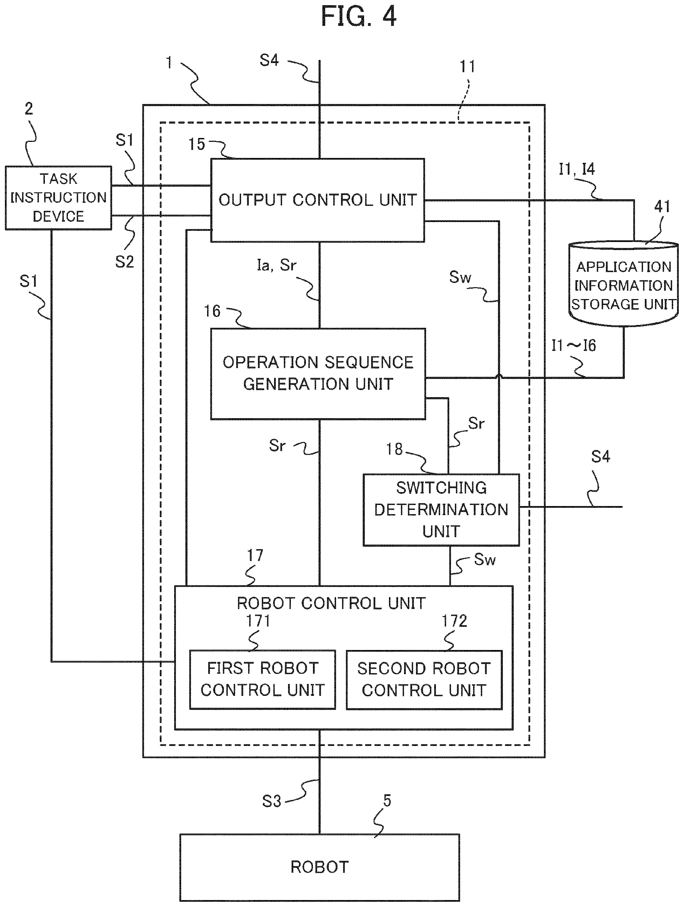

FIG. 4 is an example of a functional block showing an outline of the process to be executed by the robot controller 1. The processor 11 of the robot controller 1 functionally includes an output control unit 15, an operation sequence generation unit 16, a robot control unit 17, and a switching determination unit 18. In FIG. 4, although an example of data to be exchanged between the blocks is shown, it is not limited thereto. The same applies to the drawings of other functional blocks described below.

The output control unit 15 generates an output control signal S2 for causing the instruction device 2 used by the operator to display or output, by audio, predetermined information and transmits the output control signal S2 to the instruction device 2 via the interface 13.

For example, the output control unit 15 generates an output control signal S2 for causing the instruction device 2 to display an input screen image (also referred to as "task designation screen image") relating to designation of the objective task. Thereafter, the output control unit 15 receives the input signal S1 generated by the instruction device 2 by the input operation on the task designation screen image from the instruction device 2 via the interface 13. In this instance, the input signal S1 includes information (also referred to as "task designation information Ia") that roughly specifies the objective task. The task designation information Ia is, for example, information corresponding to rough instructions to the robot 5 and does not include information (e.g., information indicative of a control input or information indicative of the subtask to be described later) that specifies a specific operation of the robot 5. The output control unit 15 supplies the task designation information Ia based on the input signal S1 supplied from the instruction unit 2 to the operation sequence generation unit 16.

In another example, in the control mode according to the second robot control, the output control unit 15 causes the instruction device 2 to output information (also referred to as "external input support information") for supporting manipulation to be performed by the operator to generate the necessary external input. In this instance, the output control unit 15 generates an output control signal S2 for displaying a screen image (also referred to as "external input support screen image") showing the external input support information on the instruction device 2 and transmits the output control signal S2 to the instruction device 2. In the external input support screen image, for example, information on the content of the operation of the robot 5 to be specified by the external input is displayed as the external input support information. The task designation screen image and the external input support screen image will be described in detail in the section "(7) Details of Robot Controller and Output Control Unit".

The operation sequence generation unit 16 generates an operation sequence "Sr" to be executed by the robot 5 based on the task designation information Ia supplied from the output control unit 15, the measurement signal S4, and the application information stored in the storage device 4. The operation sequence Sr corresponds to a sequence (subtask sequence) of subtasks to be executed by the robot 5 in order to complete an objective task, and specifies a series of operations of the robot 5. Then, the operation sequence generation unit 16 supplies the generated operation sequence Sr to the robot control unit 17. Here, the operation sequence Sr includes information indicative of the execution order of the subtasks and information indicative of the execution timings of the subtasks.

The robot control unit 17 controls the operation of the robot 5 by supplying a control-signal S3 to the robot 5 through the interface 13. The robot control unit 17 functionally includes a first robot control unit 171 and a second robot control unit 172. The robot control unit 17 performs control of the robot 5 (i.e., the first robot control) by the first robot control unit 171 after receiving the operation sequence Sr from the operation sequence generation unit 16. Then, the robot control unit 17 switches the control mode of the robot 5 to the control (i.e., the second robot control) of the robot 5 by the second robot control unit 172 based on the switching command "Sw" supplied from the switching determination unit 18.

The first robot control unit 171 performs processing for controlling the robot 5 by the first robot control. In this instance, the first robot control unit 171 performs control for the robot 5 to execute the respective subtasks constituting the operation sequence Sr at respectively-defined execution timings (time steps) based on the operation sequence Sr supplied from the operation sequence generation unit 16. Specifically, the robot control unit 17 executes position control or torque control of the joints of the robot 5 for realizing the operation sequence Sr by transmitting the control signal S3 to the robot 5.

The second robot control unit 172 performs processing for controlling the robot 5 according to the second robot control. In this instance, the second robot control unit 172 receives the input signal S1, which is generated by the robot operation unit 24d of the instruction device 2, from the instruction device 2 through the interface 13. The input signal S1 includes, for example, information specifying the specific operation of the robot 5 (e.g., information corresponding to the control input that directly specifies the operation of the robot 5). Then, the second robot control unit 172 generates the control signal S3 based on the received input signal S1, and transmits the generated control signal S3 to the robot 5 to thereby control the robot 5. Here, for example, the control signal S3 generated by the second robot control unit 172 is a signal which the robot 5 can accept and into which an operation command indicated by the input signal S1 generated by the robot operation unit 24d is converted through a predetermined conversion process. When such a conversion process is performed in the robot 5, the second robot control unit 172 may supply the input signal S1 generated by the robot operation unit 24d to the robot 5 as it is as the control signal S3.

The robot 5 may have a function corresponding to the robot control unit 17 in place of the robot controller 1. In this instance, the robot 5 switches between the first robot control and the second robot control based on: the operation sequence Sr generated by the operation sequence generation unit 16; the switching command Sw generated by the switching determination unit 18; and the input signal S1 generated by the robot operation unit 24d.

The switching determination unit 18 determines, based on at least the operation sequence Sr, whether or not it is necessary to switch from the first robot control to the second robot control. Then, when it is determined that the switching from the first robot control to the second robot control is necessary, the switching determination unit 18 supplies a switching command Sw instructing the switching from the first robot control to the second robot control to the robot control unit 17. Details of the determination process by the switching determination unit 18 will be described in detail in the section "(6) Details of Switching Determination Unit". The switching determination unit 18 also determines whether or not to switch from the second robot control to the first robot control, and when it is determined to switch from the second robot control to the first robot control, the switching determination unit 18 may supply the switching command Sw instructing the switching to the robot control unit 17.

Here, for example, each component of the output control unit 15, the operation sequence generation unit 16, the robot control unit 17, and the switching determination unit 18 can be realized by the processor 11 executing a program. Additionally, the necessary programs may be recorded on any non-volatile storage medium and installed as necessary to realize each component. It should be noted that at least some of these components may be implemented by any combination of hardware, firmware, and software, or the like, without being limited to being implemented by software based on a program. At least some of these components may also be implemented by a user programmable integrated circuit such as a FPGA (Field-Programmable Gate Array) and a microcontroller. In this case, the integrated circuit may be used to realize a program functioning as the above components. At least some of the components may also be configured by an ASSP (Application Specific Standard Produce), an ASIC (Application Specific Integrated Circuit), or a quantum computer-controlled chip. Accordingly, each component may be implemented by any kind of hardware. The above is true for other example embodiments described later. Furthermore, each of these components may be implemented by the cooperation of a plurality of computers, for example, using cloud computing technology.

(5) Details of Operation Sequence Generation Unit

Next, the details of the process executed by the operation sequence generation unit 16 will be described.

(5-1) Functional Block

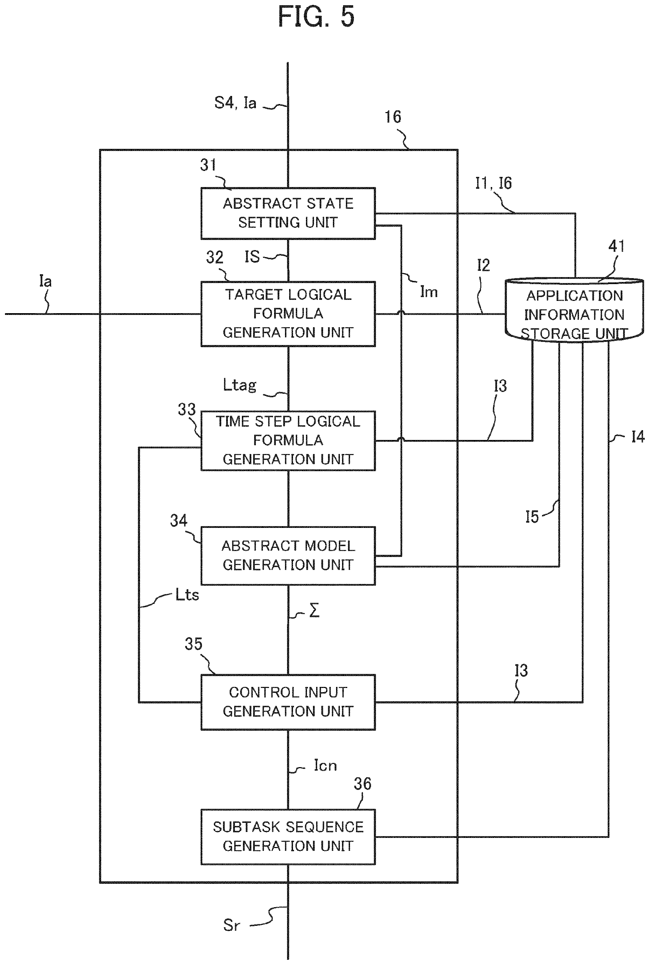

FIG. 5 is an example of a functional block showing the functional configuration of the operation sequence generation unit 16. The operation sequence generation unit 16 functionally includes an abstract state setting unit 31, a target logical formula generation unit 32, a time step logical formula generation unit 33, an abstract model generation unit 34, a control input generation unit 35, and a subtask sequence generation unit 36.

The abstract state setting unit 31 sets abstract states in the workspace on the basis of the measurement signal S4 supplied from the measurement device 7, the task designation information Ia supplied from the output control unit 15, the abstract state specification information I1, and the object model information I6. In this instance, the abstract state setting unit 31 recognizes objects existing in the workspace that need to be considered when executing the objective task and generates the recognition result Im relating to the objects. Then, based on the recognition result Im, the abstract state setting unit 31 defines a proposition to be expressed in a logical formula for each abstract state that needs to be considered when executing the objective task. When the abstract state setting unit 31 receives the task designation information Ia, the abstract state setting unit 31 supplies information (also referred to as "abstract state setting information IS") indicative of the set abstract states to the target logical formula generation unit 32.

Based on the abstract state setting information IS, the target logical formula generation unit 32 converts the objective task indicated by the task designation information Ia into a logical formula (also referred to as "target logical formula Ltag"), in the form of a temporal logic, representing the final states to be achieved. In this case, the target logical formula generation unit 32 refers to the constraint condition information I2 from the application information storage unit 41 and adds the constraint conditions to be satisfied in executing the target logical formula Ltag. Then, the target logical formula generation unit 32 supplies the generated target logical formula Ltag to the time step logical formula generation unit 33.

The time step logical formula generation unit 33 converts the target logical formula Ltag supplied from the target logical formula generation unit 32 into a logical formula (also referred to as "time step logical formula Lts") representing the states at every time step. The time step logical formula generation unit 33 supplies the generated time step logical formula Lts to the control input generation unit 35.

The abstract model generation unit 34 generates an abstract model "$\Sigma$" in which the actual dynamics in the workspace is abstracted on the basis of the abstract model information I5 stored in the application information storage unit 41 and the recognition result Im supplied from the abstract state setting unit 31. In this case, the abstract model generation unit 34 considers the target dynamics as a hybrid system in which continuous dynamics and discrete dynamics are mixed, and generates an abstract model $\Sigma$ based on the hybrid system. The method of generating the abstract model $\Sigma$ will be described later. The abstract model generation unit 34 supplies the generated abstract model $\Sigma$ to the control input generation unit 35.

The control input generation unit 35 determines a control input to the robot 5 for every time step such that the time step logical formula Lts supplied from the time step logical formula generation unit 33 and the abstract model $\Sigma$ supplied from the abstract model generation unit 34 are satisfied and such that the evaluation function (e.g., a function representing the amount of energy consumed by the robot) is optimized. The control input generation unit 35 supplies information (also referred to as "control input information Icn") indicating the control input to the robot 5 for every time step to the subtask sequence generation unit 36.

The subtask sequence generation unit 36 generates an operation sequence Sr which is a sequence of subtasks based on the control input information Icn supplied from the control input generation unit 35 and the subtask information I4 stored in the application information storage unit 41. Then, the subtask sequence generation unit 36 supplies the operation sequence Sr to the robot control unit 17 and the switching determination unit 18.

(5-2) Abstract State Setting Unit

First, with reference to the object model information I6, the abstract state setting unit 31 analyzes the measurement signal S4 by using one or more workspace-environment recognition techniques (such as an image processing technique, an image recognition technique, a speech recognition technique, a RFID (Radio Frequency Identifier) related technique) and thereby generates the recognition result Im. The recognition result Im includes information on the type, the position, and the posture of each object existing in the workspace. Examples of the objects existing in the workspace include the robot 5, target objects such as tools or parts worked on by the robot 5, obstacles, and any other working body (a worker or a working object other than the robot 5).

Next, the abstract state setting unit 31 sets the abstract states in the workspace based on the recognition result Im and the abstract state specification information I1 acquired from the application information storage unit 41. In this case, first, the abstract state setting unit 31 refers to the abstract state specification information I1 and recognizes the abstract states to be set in the workspace. The abstract states to be set in the workspace vary depending on the type of objective task. Therefore, if the abstract states to be set for each task type is registered in the abstract state specification information I1, the abstract state setting unit 31 refers to the abstract state specification information I1 corresponding to the objective task indicated by the task designation information Ia and recognizes the abstract states to be set.

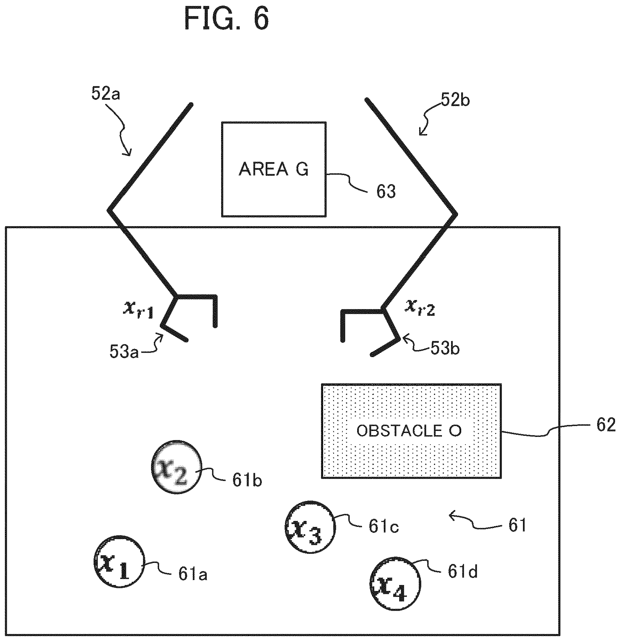

FIG. 6 shows a bird's-eye view of the workspace when pick-and-place is the objective task. In the workspace shown in FIG. 6, there are two robot arms 52a and 52b, four target objects 61 (61a to 61d), an obstacle 62, and an area G that is the destination of the target objects 61.

In this case, first, the abstract state setting unit 31 recognizes the states of the target objects 61, the existence range of the obstacle 62, the state of the robot 5, the existence range of the area G, and the like.

Here, the abstract state setting unit 31 recognizes the position vectors "$x_1$" to "$x_4$" indicative of the centers of the target objects 61a to 6ld as the positions of the target objects 61a to 61d, respectively. Further, the abstract state setting unit 31 recognizes the position vector "$x_{r1}$" of the robot hand 53a for grasping a target object as the position of the robot arm 52a and the position vector "$x_{r2}$" of the robot hand 53b for grasping a target object as the position of the robot arm 52b.

Similarly, the abstract state setting unit 31 recognizes the postures of the target objects 61a to 61d (it is unnecessary in the example of FIG. 6 because each target object is spherical), the existence range of the obstacle 62, the existence range of the area G, and the like. For example, when assuming that the obstacle 62 is a rectangular parallelepiped and the area G is a rectangle, the abstract state setting unit 31 recognizes the position vector of each vertex of the obstacle 62 and the area G.

The abstract state setting unit 31 determines the abstract states to be defined in the objective task by referring to the abstract state specification information 11. In this case, the abstract state setting unit 31 determines propositions indicating the abstract states based on: the recognition result (e.g., the number of objects for each type) relating to the objects existing in the workspace; and the abstract state specification information I1.

In the example of FIG. 6, the abstract state setting unit 31 assigns identification labels "1" to "4" to the target objects 61a to 61d specified by the recognition result Im, respectively. Further, the abstract state setting unit 31 defines a proposition "$g_i$" that the target object "i" (i = 1 to 4) exists in the area G that is the goal point to be finally placed. Further, the abstract state setting unit 31 assigns an identification label "O" to the obstacle 62 and defines the proposition "$o_i$" that the target object i interferes with the obstacle O. Furthermore, the abstract state setting unit 31 defines a proposition "h" that a robot arm 52 interferes with another robot arm 52. The abstract state setting unit 31 may further define the proposition "$v_i$" that the target object "i" exists on the work table (the table in which the target objects and the obstacle exist in their initial states), the proposition "$w_i$" that a target object exists in the non-work area other than the work table and the area G. The non-work area is, for example, an area (floor surface and the like) in which a target object exists when the target object falls down from the work table.

In this way, by referring to the abstract state specification information 11, the abstract state setting unit 31 recognizes the abstract states to be defined, and defines the propositions ($g_i$, $o_i$, h in the above-described example) representing the abstract states according to the number of the target objects 61, the number of the robot arms 52, the number of the obstacles 62, and the number of the robots 5. The abstract state setting unit 31 supplies the target logical formula generation unit 32 with the abstract state setting information Is which includes the information indicative of the propositions representing the abstract states.

(5-3) Target Logical Formula Generation Unit

First, the target logical formula generation unit 32 converts the objective task indicated by the task designation information Ia into a logical formula according to the temporal logic.

For example, in the example of FIG. 6, it is herein assumed that the objective task "the target object (i = 2) finally exists in the area G" is given. In this case, the target logical formula generation unit 32 generates the logical formula "◊g₂" which represents the objective task by using the operator "◊" corresponding to "eventually" of the linear logical formula (LTL: Linear Temporal Logic) and the proposition "g$_i$" defined by the abstract state setting unit 31. The target logical formula generation unit 32 may express the logical formula by using any operators according to the temporal logic other than the operator "◊" such as logical AND "∧", logical OR "∨", negative "¬", logical implication "=>", always "□", next "∘", and until "U". The logical formula may be expressed by any temporal logic other than linear temporal logic such as MTL (Metric Temporal Logic) and STL (Signal Temporal Logic).

The task designation information Ta may be information specifying the objective task in a natural language. Various techniques exist for converting a task expressed in a natural language into a logical formula.

Next, the target logical formula generation unit 32 generates the target logical formula Ltag by adding the constraint conditions indicated by the constraint condition information I2 to the logical formula indicating the objective task.

For example, provided that two constraint conditions "a robot arm 52 does not interfere with another robot arm 52" and "the target object i does not interfere with the obstacle O" for pick-and-place shown in FIG. 6 are included in the constraint condition information I2, the target logical formula generation unit 32 converts these constraint conditions into the logical formula. Specifically, the target logical formula generation unit 32 converts the above-described two constraint conditions into the following logical formulas, respectively, using the proposition "o$_i$" and the proposition "h" defined by the abstract state setting unit 31 in the case shown in FIG. 6.

$$\Box \neg h$$

$$\bigwedge_i \Box \neg o_i$$

Therefore, in this case, the target logical formula generation unit 32 generates the following target logical formula Ltag obtained by adding the logical formulas of these constraint conditions to the logical formula "◊g₂" corresponding to the objective task "the target object (i = 2) finally exists in the area G".

$$(\Diamond g_2) \wedge (\Box \neg h) \wedge \left( \bigwedge_i \Box \neg o_i \right)$$

In practice, the constraint conditions corresponding to the pick-and-place is not limited to the above-described two constraint conditions and there are other constraint conditions such as "a robot arm 52 does not interfere with the obstacle O", "plural robot arms 52 do not grasp the same target object", "target objects does not contact with each other". Such constraint conditions are also stored in the constraint condition information I2 and are reflected in the target logical formula Ltag.

(5-4) Time Step Logical Formula Generation Unit

The time step logical formula generation unit 33 determines the number of time steps (also referred to as the "target time step number") needed to complete the objective task, and determines possible combinations of propositions representing the states at every time step such that the target logical formula Ltag is satisfied with the target time step number. Since the combinations are normally plural, the time step logical formula generation unit 33 generates the time step logical formula Lts that is a logical formula obtained by combining these combinations by logical OR. Each of the combinations described above is a candidate of a logical formula representing a sequence of operations to be instructed to the robot 5, and therefore it is hereinafter also referred to as "candidate φ".

Here, a description will be given of a specific example of the process executed by the time step logical formula generation unit 33 in the case where the objective task "the target object (i = 2) finally exists in the area G" exemplified in FIG. 6 is set.

In this instance, the following target logical formula Ltag is supplied from the target logical formula generation unit 32 to the time step logical formula generation unit 33.

$$(\Diamond g_2) \wedge (\Box \neg h) \wedge \left( \bigwedge_i \Box \neg o_i \right)$$

In this case, the time-step logical formula generation unit 33 uses the proposition "g$_{i,k}$" that is the extended proposition "g$_i$" to include the concept of time steps. Here, the proposition "g$_{i,k}$" is the proposition "the target object i exists in the area G at the time step k". Here, when the target time step number is set to "3", the target logical formula Ltag is rewritten as follows.

$$(\Diamond g_{2,3}) \wedge (\wedge_{k=1,2,3}\square\neg h_k) \wedge (\wedge_{i,k=1,2,3}\square\neg o_i)$$

$\Diamond g_{2,3}$ can be rewritten as shown in the following expression.

$$\Diamond g_{2,3} = \left(\neg g_{2,1} \wedge \neg g_{2,2} \wedge g_{2,3}\right) \vee \left(\neg g_{2,1} \wedge g_{2,2} \wedge g_{2,3}\right)$$
$$\vee \left(g_{2,1} \wedge \neg g_{2,2} \wedge g_{2,3}\right) \vee \left(g_{2,1} \wedge g_{2,2} \wedge g_{2,3}\right)$$

The target logical formula Ltag described above is represented by logical OR ($\varphi_1 \vee \varphi_2 \vee \varphi_3 \vee \varphi_4$) of four candidates "$\varphi_1$" to "$\varphi_4$", as shown in below.

$$\phi_1 = \left(\neg g_{2,1} \wedge \neg g_{2,2} \wedge g_{2,3}\right) \wedge \left(\wedge_{k=1,2,3}\square\neg h_k\right) \wedge \left(\wedge_{i,k=1,2,3}\square\neg o_{i,k}\right)$$

$$\phi_2 = \left(\neg g_{2,1} \wedge g_{2,2} \wedge g_{2,3}\right) \wedge \left(\wedge_{k=1,2,3}\square\neg h_k\right) \wedge \left(\wedge_{i,k=1,2,3}\square\neg o_{i,k}\right)$$

$$\phi_3 = \left(g_{2,1} \wedge \neg g_{2,2} \wedge g_{2,3}\right) \wedge \left(\wedge_{k=1,2,3}\square\neg h_k\right) \wedge \left(\wedge_{i,k=1,2,3}\square\neg o_{i,k}\right)$$

$$\phi_4 = \left(g_{2,1} \wedge g_{2,2} \wedge g_{2,3}\right) \wedge \left(\wedge_{k=1,2,3}\square\neg h_k\right) \wedge \left(\wedge_{i,k=1,2,3}\square\neg o_{i,k}\right)$$

Therefore, the time step logical formula generation unit 33 determines the time step logical formula Lts to be the logical OR of the four candidates $\varphi_1$ to $\varphi_4$. In this case, the time step logical formula Lts is true if at least one of the four candidates $\varphi_1$ to $\varphi_4$ is true.

Next, a supplementary description will be given of a method of setting the target time step number.

For example, the time step logical formula generation unit 33 determines the target time step number based on the prospective work time specified by the input signal S1 supplied from the instruction device 2. In this case, the time step logical formula generation unit 33 calculates the target time step number based on the prospective work time described above and the information on the time width per time step stored in the memory 12 or the storage device 4. In another example, the time step logical formula generation unit 33 stores in advance in the memory 12 or the storage device 4 information in which a suitable target time step number is associated with each type of objective task, and determines the target time step number in accordance with the type of objective task to be executed by referring to the information.

In some embodiments, the time step logical formula generation unit 33 sets the target time step number to a predetermined initial value. Then, the time step logical formula generation unit 33 gradually increases the target time step number until the time step logical formula Lts which enables the control input generation unit 35 to determine the control input is generated. In this case, if the control input generation unit 35 ends up not being able to derive the optimal solution in the optimization processing with the set target time step number, the time step logical formula generation unit 33 adds a predetermined number (1 or more integers) to the target time step number.

At this time, the time step logical formula generation unit 33 may set the initial value of the target time step number to a value smaller than the number of time steps corresponding to the work time of the objective task expected by the user. Thus, the time step logical formula generation unit 33 suitably suppresses setting the target time step number to an unnecessarily large number.

(5-5) Abstract Model Generation Unit

The abstract model generation unit 34 generates the abstract model $\Sigma$ based on the abstract model information 15 and the recognition result Im. Here, in the abstract model information I5, information required to generate the abstract model $\Sigma$ is recorded for each type of objective task. For example, when the objective task is a pick-and-place, a general-purpose abstract model is recorded in the abstract model information I5, wherein the position or the number of target objects, the position of the area where the target objects are to be placed, the number of robots 5 (or the number of robot arms 52), and the like are not specified in the general-purpose abstract model. The abstract model generation unit 34 generates the abstract model $\Sigma$ by reflecting the recognition result Im in the general-purpose abstract model which includes the dynamics of the robot 5 and which is recorded in the abstract model information I5. Thereby, the abstract model $\Sigma$ is a model in which the states of objects existing in the workspace and the dynamics of the robot 5 are abstractly expressed. In the case of pick-and-place, the states of the objects existing in the workspace indicate the position and the number of the target objects, the position of the area where the target object are to be placed, the number of robots 5, and the like.

When there are one or more other working bodies, information on the abstracted dynamics of the other working bodies may be included in the abstract model information I5. In this case, the abstract model $\Sigma$ is a model in which the states of the objects existing in the workspace, the dynamics of the robot 5, and the dynamics of the other working bodies are abstractly expressed.

Here, at the time of work of the objective task by the robot 5, the dynamics in the workspace is frequently switched. For example, in the case of pick-and-place, while the robot arm 52 is gripping the target object i, the target object i can be moved. However, if the robot arm 52 is not gripping the target object i, the target object i cannot be moved.

In view of the above, in the present example embodiment, in the case of pick-and-place, the operation of grasping the target object i is abstractly expressed by the logical variable "$\delta_i$". In this case, for example, the abstract model generation unit 34 can define the abstract model $\Sigma$ to be set for the workspace shown in FIG. 6 as the following equation (1).

$$\begin{bmatrix} x_{r1} \\ x_{r2} \\ x_1 \\ \vdots \\ x_4 \end{bmatrix}_{k+1} = I \begin{bmatrix} x_{r1} \\ x_{r2} \\ x_1 \\ \vdots \\ x_4 \end{bmatrix}_k + \begin{bmatrix} I & 0 \\ 0 & I \\ \delta_{1,1}I & \delta_{2,1}I \\ \vdots & \vdots \\ \delta_{1,4}I & \delta_{2,4}I \end{bmatrix} \begin{bmatrix} u_1 \\ u_2 \end{bmatrix} \qquad (1)$$

$$h_{ij_{\min}} \ (1 - \delta_i) \le h_{ij}(x) \le h_{ij_{\max}} \quad \delta_i + (\delta_i - 1)\varepsilon$$

Here, "$u_j$" indicates a control input for controlling the robot hand j ("j = 1" is the robot hand 53a, "j = 2" is the robot hand 53b), and "I" indicates a unit matrix and "0" indicates zero (null) matrix. It is noted that the control input is herein assumed to be a speed as an example but it may be an acceleration. Further, "$\delta_{j,\,i}$" is a logical variable that is set to "1" when the robot hand j grasps the target object i and is set to "0" in other cases. Each of "$x_{r1}$" and "$x_{r2}$" indicates the position vector of the robot hand j (j = 1, 2), and each of "$x_1$" to "$x_4$" indicates the position vector of the target object i (i = 1 to 4). Further, "h (x)" is a variable to be "h (x) >= 0" when the robot hand exists in the vicinity of a target object to the extent that it can grasp the target object, and satisfies the following relationship with the logical variable $\delta$.

$$\delta = 1 \quad \Leftrightarrow \quad h\ (x) \geqq 0$$

In the above expression, when the robot hand exists in the vicinity of a target object to the extent that the target object can be grasped, it is considered that the robot hand grasps the target object, and the logical variable $\delta$ is set to 1.

Here, the expression (1) is a difference equation showing the relationship between the states of the objects at the time step k and the states of the objects at the time step k + 1. Then, in the above expression (1), the state of grasping is represented by a logical variable that is a discrete value, and the movement of the target object is represented by a continuous value. Accordingly, the expression (1) shows a hybrid system.

The expression (1) considers not the detailed dynamics of the entire robot 5 but only the dynamics of the robot hand, which is the hand of the robot 5 that actually grasps a target object. Thus, it is possible to suitably reduce the calculation amount of the optimization process by the control input generation unit 35.

Further, the abstract model information I5 includes: information for deriving the difference equation indicated by the expression (1) from the recognition result Im; and the logical variable corresponding to the operation (the operation of grasping a target object i in the case of pick-and-place) causing the dynamics to switch. Thus, even when there is a variation in the position and the number of the target objects, the area (area G in FIG. 5) where the target objects are to be placed and the number of the robots 5 and the like, the abstract model generation unit 34 can determine the abstract model Σ in accordance with the environment of the target workspace based on the abstract model information 15 and the recognition result Im.

It is noted that, in place of the model shown in the expression (1), the abstract model generation unit 34 may generate any other hybrid system model such as mixed logical dynamical (MLD) system and a combination of Petri nets and automaton.

(5-6) Control Input Generation Unit

The control input generation unit 35 determines the optimal control input for the robot 5 with respect to each time step based on the time step logical formula Lts supplied from the time step logical formula generation unit 33 and the abstract model Σ supplied from the abstract model generation unit 34. In this case, the control input generation unit 35 defines an evaluation function for the objective task and solves the optimization problem of minimizing the evaluation function while setting the abstract model Σ and the time step logical formula Lts as constraint conditions. For example, the evaluation function is predetermined for each type of the objective task and stored in the memory 12 or the storage device 4.

For example, when the objective task is pick-and-place, the control input generation unit 35 determines the evaluation function such that the control input "$u_k$" and the distance "$d_k$" between the target object to be carried and the goal point of the target object are minimized (i.e., the energy spent by the robot 5 is minimized). The distance $d_k$ described above corresponds to the distance between the target object 2 and the area G when the objective task is "the target object (i = 2) finally exists in the area G."

For example, the control input generation unit 35 determines the evaluation function to be the sum of the square of the distance $d_k$ and the square of the control input $u_k$ in all time steps. Then, the control input generation unit 35 solves the constrained mixed integer optimization problem shown in the following expression (2) while setting the abstract model Σ and the time-step logical formula Lts (that is, the logical OR of the candidates $\varphi_i$) as the constraint conditions.

$$\min_{u} \left( \sum_{k=0}^{T} \left( \|d_k\|_2^2 + \|u_k\|_2^2 \right) \right)$$
$$s.t. \quad \Sigma$$
$$\vee \phi_i$$
(2)

Here, "T" is the number of time steps to be set in the optimization and it may be a target time step number or may be a predetermined number smaller than the target time step number as described later. In some embodiments, the control input generation unit 35 approximates the logical variable to a continuous value (i.e., solve a continuous relaxation problem). Thereby, the control input generation unit 35 can suitably reduce the calculation amount. When STL is adopted instead of linear temporal logic (LTL), it can be described as a nonlinear optimization problem.

Further, if the target time step number is large (e.g., larger than a predetermined threshold value), the control input generation unit 35 may set the time step number T in the expression (2) used for optimization to a value (e.g., the threshold value described above) smaller than the target time step number. In this case, the control input generation unit 35 sequentially determines the control input $u_k$ by solving the optimization problem based on the expression (2), for example, every time a predetermined number of time steps elapses.

In some embodiments, the control input generation unit 35 may solve the optimization problem based on the expression (2) for each predetermined event corresponding to the intermediate state for the accomplishment state of the objective task and determine the control input $u_k$ to be used. In this case, the control input generation unit 35 determines the time step number T in the expression (2) to be the number of time steps up to the next event occurrence. The event described above is, for example, an event in which the dynamics switches in the workspace 6. For example, when pick-and-place is the objective task, examples of the event include "the robot 5 grasps the target object" and "the robot 5 finishes carrying one of the target objects to the destination (goal) point." For example, the event is predetermined for each type of the objective task, and information indicative of one or more events for each type of the objective task is stored in the storage device 4.

(5-7) Subtask Sequence Generation Unit

The subtask sequence generation unit 36 generates the operation sequence Sr based on the control input information Icn supplied from the control input generation unit 35 and the subtask information I4 stored in the application information storage unit 41. In this case, by referring to the subtask information I4, the subtask sequence generation unit 36 recognizes subtasks that the robot 5 can accept and converts the control input for every time step indicated by the control input information Icn into subtasks.

For example, in the subtask information I4, there are defined functions representing two subtasks, the movement (reaching) of the robot hand and the grasping by the robot hand, as subtasks that can be accepted by the robot 5 when the objective task is pick-and-place. In this case, the function "Move" representing the reaching is, for example, a function that uses the following three arguments (parameter): the initial state of the robot 5 before the function is executed; the final state of the robot 5 after the function is executed; and the time to be required for executing the function. In addition, the function "Grasp" representing the grasping is, for example, a function that uses the following these arguments: the state of the robot 5 before the function is executed; the state of the target object to be grasped before the function is executed; and the logical variable $\delta$. Here, the function "Grasp" indicates performing a grasping operation when the logical variable $\delta$ is "1", and indicates performing a releasing operation when the logical variable $\delta$ is "0". In this case, the subtask sequence generation unit 36 determines the function "Move" based on the trajectory of the robot hand determined by the control input for every time step indicated by the control input information Icn, and determines the function "Grasp" based on the transition of the logical variable $\delta$ in units of time step indicated by the control input information Icn.

Then, the subtask sequence generation unit 36 generates the operation sequence Sr configured by the function "Move" and the function "Grasp", and supplies a control signal S3 indicating the subtask sequence to the robot 5. For example, if the objective task is "the target object (i = 2) finally exists in the area G", the subtask sequence generation unit 36 generates the operation sequence of the function "Move", the function "Grasp", the function "Move", and the function "Grasp" for the robot hand closest to the target object 2. In this case, the robot hand closest to the target object (i = 2) moves to the position of the target object 2 by the function "Move", grasps the target object (i = 2) by the function "Grasp", moves to the area G by the function "Move", and places the target object (i = 2) in the area G by the function "Grasp".

(6) Details of Switching Determination Unit

A description will be given in order of a first embodiment and a second embodiment each of which is a specific form of switching by the switching determination unit 18 from the first robot control to the second robot control. According to the first embodiment, the robot controller 1 systematically performs the switching of the control of the robot 5 to the second robot control based on the external input specific subtask included in the operation sequence Sr. On the other hand, according to the second embodiment, the robot controller 1 urgently performs the switching of the control of the robot 5 to the second robot control if some abnormality occurs. Then, in any of these embodiments, the switching determination unit 18 smoothly performs switching from the first robot control to the second robot control.

(6-1) First Embodiment

In the first embodiment, the switching determination unit 18 determines whether or not the switching from the first robot control to the second robot control is necessary based on whether or not to execute an external input specific subtask which is predetermined to be executed by the second robot control. The subtask information I4 includes information on external input specific subtasks. Then, when the switching determination unit 18 determines that the execution timing of an external input specific subtask incorporated as a part of the operation sequence Sr, the switching determination unit 18 supplies the switching command Sw instructing the switching from the first robot control to the second robot control to the robot control unit 17.

Here, a supplementary description will be given of a method for recognizing the execution timing of an external input specific subtask in the first embodiment.

For example, the switching determination unit 18 recognizes the execution timing of the external input specific subtask based on the time step information associated with the respective subtasks included in the operation sequence Sr. In this case, the switching determination unit 18 determines the execution timing of an external input specific subtask to be time equivalent to the time step of performing the external input specific subtask, and, at the time, supplies the robot control unit 17 with the switching command Sw instructing the switching from the first robot control to the second robot control.

In another example, based on the completion notification of the subtask supplied from the robot 5 or the robot control unit 17, the switching determination unit 18 determines whether or not each subtask constituting the operation sequence Sr is completed and thereby recognizes the subtask which the robot 5 is currently working on. Even in this case, the switching determination unit 18 can suitably recognize the execution timing of the external input specific subtask. The switching determination unit 18 may recognize, based on the measurement signal S4, the execution timing of the external input specific subtask by recognizing the ongoing subtask which the robot 5 is currently working on. In this instance, for example, the switching determination unit 18 analyzes the measurement signal S4 such as an image captured in the workspace based on a pattern recognition technique using deep learning, and recognizes the subtask to be executed by the robot 5 or the ongoing subtask.

According to the first embodiment, when the switching determination unit 18 causes the robot 5 to perform a planned operation which requires the second robot control, the switching determination unit 18 can smoothly switch the control of the robot 5 from the first robot control to the second robot control.

(6-2) Second Embodiment

Next, a description will be given of the second embodiment. In the second embodiment, the switching determination unit 18 determines whether or not to continue the first robot control based on the operation sequence Sr and the measured execution status of the operation of the robot 5. In this case, the switching determination unit 18 determines that the continuation of the first robot control is inappropriate if there is a predetermined amount or more of temporal deviation (time deviation) or spatial deviation between: the measured execution status of the operation; and the predicted status on the assumption that the operation sequence Sr is performed according to the initial plan made at the time of generating the operation sequence Sr. Then, when the switching determination unit 18 recognizes any obstacle to the continuation of the first robot control, the switching determination unit 18 determines that the continuation of the first robot control is inappropriate and that therefore it is necessary to switch to the second robot control.

(6-2-1) Time Deviation Based Determination of Whether to Continue First Robot Control

First, in the second embodiment, a specific example of the determination of whether or not to continue the first robot control based on the time deviation will be specifically described.

In this case, for example, during the execution of the first robot control, the switching determination unit 18 calculates, based on the operation sequence Sr and the execution status of the operation of the robot 5, a delay time length that is the amount (time-lag amount) of the time deviation from the plan based on the operation sequence Sr. Then, the switching determination unit 18 determines whether or not to continue the first robot control based on the calculated delay time length. Then, if the execution status of the operation of the robot 5 is a predetermined time or more slower than the planned status based on the operation sequence Sr, the switching determination unit 18 determines that some abnormality (error) has occurred and that the continuation of the first robot control is inappropriate.

For example, if the switching determination unit 18 identifies a subtask which is consuming another predetermined number of time steps or more in addition to the planned number (i.e., the required time length) of time steps for completion, the switching determination unit 18 determines that an error has occurred with respect to the execution of the subtask and that the continuation of the first robot control is impossible. In this instance, the switching determination unit 18 determines that the subtask in which the delay has occurred should be executed by the second robot control, and transmits a switching command Sw instructing switching from the first robot control to the second robot control with respect to the subtask to the robot control unit 17. The "predetermined number of time steps" described above is, for example, an adapted value and is stored in advance in the storage device 4 or the memory 12 or the like. According to this example, the switching determination unit 18 can accurately identify the subtask in which the delay is occurring due to some abnormality to thereby smoothly switch from the first robot control to the second robot control for executing the subtask.

Instead of determining the presence or absence of delay in the plan of each subtask based on the operation sequence Sr, the switching determination unit 18 may determine the presence or absence of the above-described delay in the plan with respect to each target object. In this case, for example, the switching determination unit 18 recognizes the number of time steps to be required with respect to each target object based on the operation sequence Sr, and counts the number of time steps actually consumed with respect to the each target object. Then, when the number of time steps actually consumed is a predetermined number or more larger than the number of time steps to be required, the switching determination unit 18 determines that it is necessary to perform the second robot control with respect to the target object. In this case, for example, the switching determination unit 18 determines that the operation relating to the target object should be performed under the second robot control, and transmits the switching command Sw instructing switching to the second robot control to the robot control unit 17.

In yet another example, the switching determination unit 18 may determine that the delay has occurred and that therefore it is necessary to switch to the second robot control if a predetermined time has elapsed from the beginning (i.e., the time when the operation sequence Sr is supplied to the robot control unit 17) of the objective task. The length of the predetermined time described above may be set on the basis of the number of time steps planned in the operation sequence Sr, or may be set on the basis of the expected time duration of the objective task previously stored in the storage device 4 or the like.

Thus, according to the determination of whether or not to continue the first robot control based on the time deviation, the switching determination unit 18 can smoothly perform switching from the first robot control to the second robot control in order to cope with the abnormal state.

(6-2-2) Spatial Deviation Based Determination of Whether to Continue First Robot Control

Next, in the second embodiment, a specific example of the determination on whether or not to continue the first robot control based on spatial deviation will be specifically described.

In this case, during the execution of the first robot control, the switching determination unit 18 calculates, based on the operation sequence Sr and the execution status of the operation of the robot 5, the amount of the spatial deviation from the plan based on the operation sequence Sr. Then, the switching determination unit 18 determines, based on the spatial deviation amount, whether or not to continue the first robot control. Then, if the operation execution status of the robot 5 spatially deviates by a predetermined amount or more from the planned status based on the operation sequence Sr, the switching determination unit 18 determines that some abnormality (error) has occurred and that the continuation of the first robot control is inappropriate.

Specifically, the switching determination unit 18 quantitatively compares the locus (also referred to as "predicted movement locus") of the position of the robot 5 predicted on the assumption that the operation sequence Sr is normally executed to the locus (also referred to as "actual movement locus") of the actual position of the robot 5 measured based on the measurement signal S4. In this case, the "movement locus" indicates, for example, the locus (trajectory) of the position obtained per time step or at predetermined time intervals. When it is determined that the predicted movement locus of the robot 5 is not similar to the actual movement locus of the robot 5, the switching determination unit 18 determines that an abnormality has occurred and that continuation of the first robot control is impossible. It is noted that the information on the positions of the robot 5 constituting the predicted movement locus is calculated by, for example, optimization processing by the control input generation unit 35.

Here, a supplementary description will be given of a method of the similarity determination on the movement locus described above. The switching determination unit 18 calculates the degree of similarity between the predicted movement locus of the robot 5 and the actual movement locus of the robot 5 using, for example, any technique for calculating a quantitative similarity between plural movement loci. In this instance, for example, the degree of similarity may be expressed by the sum or the largest value of the distances between the points of the loci associated by ICP (Iterative Closest Point). Then, the switching determination unit 18 determines that the continuation of the first robot control is impossible if the degree of similarity is equal to or less than a predetermined value. In this instance, for example, the switching determination unit 18 calculates the degree of similarity between the predicted movement locus and the actual movement locus with respect to a specific part of the robot 5 (the robot hands 53a and 53b in the case of the example shown in FIG. 6) of which the abstract state is set.

Accordingly, even by judging the suitability of continuation of the first robot control based on spatial deviation, the switching determination unit 18 can smoothly perform switching from the first robot control to the second robot control in order to cope with an abnormal state.

The switching determination unit 18 may determine whether or not to continue the first robot control based on the movement locus of a target object instead of or in addition to the movement locus of the robot 5. In this case, for example, the switching determination unit 18 calculates the degree of similarity between the predicted movement locus of the target object and the actual movement locus of the target object measured based on the measurement signal S4. Then, if the degree of similarity is equal to or less than a predetermined value, the switching determination unit 18 determines that continuation of the first robotic control is impossible.

(6-2-3) Other Determination Approaches

In such a case that plural operation sequences Sr are sequentially generated based on one or more intermediate states until completion of the objective task, the switching determination unit 18 may determine that it is necessary to switch to the second robot control if any of the operation sequences Sr is not successfully completed.

In this case, it is herein assumed that the operation sequence generation unit 16 sets one or more intermediate states (also referred to as "subgoals") up to the completion state (goal) of the objective task. Then, the operation sequence generation unit 16 sequentially generates a plurality of operation sequences Sr required from the beginning to the completion of the objective task based on the subgoals. Specifically, the operation sequence generation unit 16 sequentially generates: the operation sequence Sr from the initial state to the first subgoal; the operation sequences Sr from a subgoal to the following subgoal; the operation sequences Sr from the final subgoal to the completion state (i.e., goal).

For example, information necessary for setting the subgoals for each objective task is stored in the storage device 4 in advance, and the operation sequence generation unit 16 sets the subgoals by referring to the information. The above-described information is, in the case of pick-and-place for example, information indicative of the maximum number of the target objects to be moved per one operation sequence Sr.

Then, based on the completion notification or the like supplied from the robot control unit 17 for each operation sequence Sr, the switching determination unit 18 determines whether or not the each operation sequence Sr is successfully completed. Then, if any of the operation sequences Sr is not completed successfully, the switching determination unit 18 generates the switching command Sw. For example, if it is determined that the operation sequence Sr for a subgoal is generated continuously, the switching determination unit 18 determines that some abnormality which disables the subgoal to be completed has occurred. In this case, the switching determination unit 18 may supply the switching command Sw to the robot control unit 17.

Even in this example, the switching determination unit 18 can accurately determine whether or not to switch from the first robot control to the second robot control.

(7) Details of Robot Control Unit and Output Control Unit

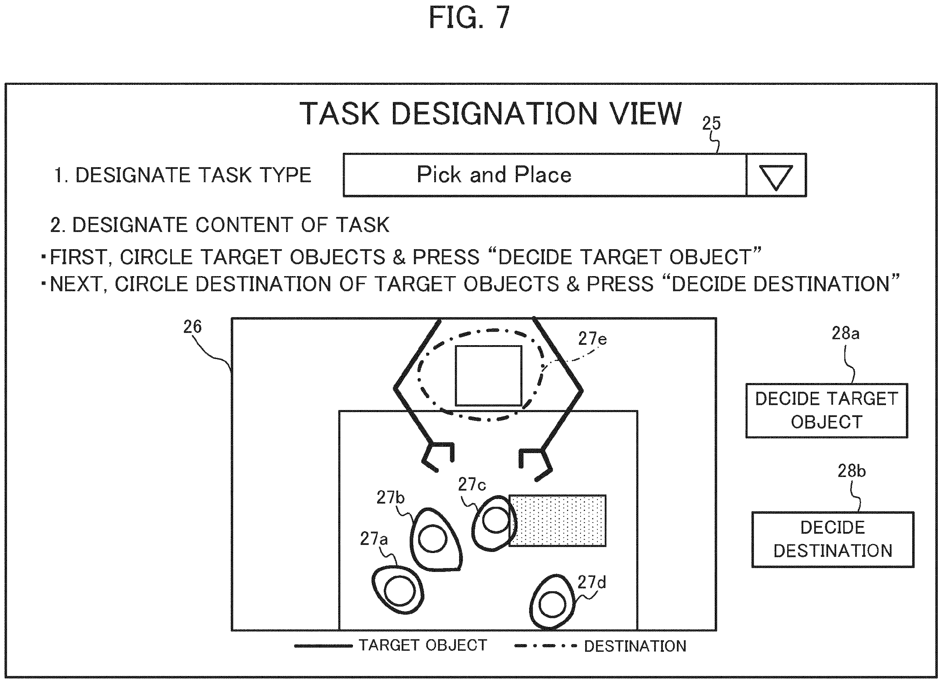

Details of the process executed by the output control unit 15 will be described. Hereinafter, each display example of a task designation screen image and an external input support screen image displayed by the instruction device 2 under the control of the output control unit 15 will be described with reference to FIG. 7 to FIG. 9.

FIG. 7 shows a display example of the task specification screen image for specifying an objective task. The output control unit 15 generates an output control signal S2 and transmits the output control signal S2 to the instruction device 2 to thereby display the task designation screen image shown in FIG. 7 on the instruction device 2. The task designation screen image shown in FIG. 7 mainly includes a task type designation field 25, a workspace display field 26, and various buttons 28 (28a and 28b).

The output control unit 15 receives an input specifying the type of the objective task in the task type designation field 25. Here, as an example, the task type designation field 25 is an input field according to a pull-down menu format, and the output control unit 15 lists selectable candidates for the type of objective task in the task type designation field 25. In this case, the pick-and-place is specified as the type of the objective task in the task type designation field 25.

Further, the output control unit 15 displays, in the workspace display field 26, an image (workspace image) captured by the measurement device 7 in the workspace, and receives the designations necessary for the execution of the objective task specified in the task type designation field 25. In the example shown in FIG. 7, the output control unit 15 refers to the abstract state specification information I1 corresponding to the pick-and-place selected in the task type designation field 25 and recognizes that the target object to be worked on by the robot 5 and the destination of the target object need to be determined. Therefore, the output control unit 15 receives an input for respectively specifying the target objects and the destination in the workspace display field 26. Here, as an example, the output control unit 15 displays the marks 27a to 27d specifying the target objects by solid line, and displays the mark 27e specifying the destination by broken line. Then, when it is detected that the object determination button 28a is selected, the output control unit 15 recognizes the position information on the marks 27a to 27d drawn by the user as the information specifying the positions of the target objects. Further, when it is detected that the destination determination button 28b is further selected, the output control unit 15 recognizes the position information on the mark 27e drawn by the user after the selection of the object determination button 28a as the information specifying the destination. The output control unit 15 supplies the information (in this case, the position information on the respective marks on the workspace image) specifying these target objects and the destination to the operation sequence generation unit 16 as the task designation information Ia.

As described above, according to the task designation screen image illustrated in FIG. 7, the output control unit 15 suitably receives the user input relating to the designation of the type of the objective task and the designation of the target object relating to the objective task, and can suitably acquire the task designation information Ia.

Instead of receiving an input circling the target objects and the destination, the output control unit 15 may receive an input specifying a part of pixels constituting the target objects and the destination respectively by touch operation or click operation. In this instance, the output control unit 15 uses the position information on the designated pixels as the information for specifying the target objects and the destination, respectively, and supplies the information to the operation sequence generation unit 16 as the task designation information Ia.

The output control unit 15 may generate the task designation information Ia, regardless of the user input in the workspace display field 26, based on the recognition result Im relating to the target objects and the destination. Instead of displaying the workspace image generated by the measurement device 7 in the workspace display field 26, the output control unit 15 may display a CAD image reproducing the environment in the workspace in the workspace display field 26. In this instance, the output control unit 15 generates the CAD images reproducing the environment in the workspace based on the recognition result Im generated by the abstract state setting unit 31 and the object model information I6 in which CAD data relating to the target object and the like is recorded.

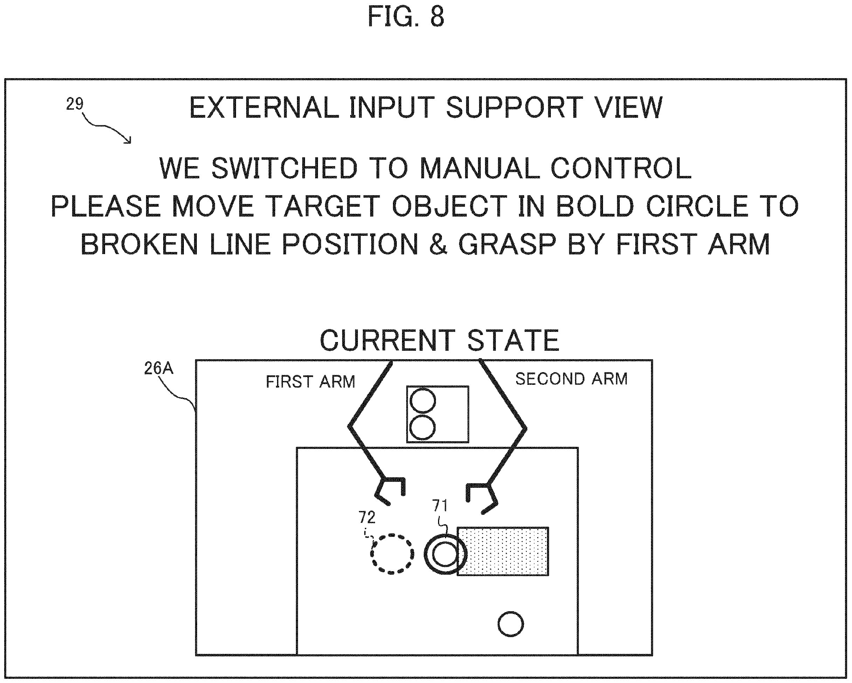

FIG. 8 shows a first display example of the external input support screen image when the switching mode from the first robot control to the second robot control adopted by the switching determination unit 18 is the first embodiment. The output control unit 15 generates an output control signal S2 and transmits the output control signal S2 to the instruction device 2 thereby to display the external input support screen image shown in FIG. 8 on the instruction device 2. The external input support screen image shown in FIG. 8 mainly includes a workspace display field 26A and an operation content display area 29.

Here, the work space display field 26A displays a workspace image which is an image obtained by photographing the present workspace or a CAD image which schematically represents the present workspace, and the operation description display area 29 displays the content of the operation of the robot 5 to be specified by external input. In this case, as an example, the external input specific subtask is a subtask to move the target object, which is adjacent to the obstacle and which the robot 5 cannot directly grasp, to a position where the target object can be grasped and grasp the target object. Further, in FIG. 8, the robot arm 52a in FIG. 6 is denoted as "first arm", the robot arm 52b is denoted as "second arm".

The flow of the process until the external input support screen image shown in FIG.8 is displayed will be described. First, the switching determination unit 18 determines that the execution timing of an external input specific subtask (here, the target object is to be moved to a graspable position and to be grasped) requiring second robot control, and transmits the switching command Sw to the robot control unit 17. Then, after receiving the switching command Sw, the robot control unit 17 shifts the control mode to the second robot control to be executed by the second robot control unit 172. Then, when the control mode shifts to the second robot control, on the basis of the subtask information I4 indicating the content of operation of the target external input specific subtask and the operation sequence Sr, the output control unit 15 recognizes, for example, the content of operation of the robot 5 that needs to be instructed through the external input from the operator. Then, the output control unit 15 generates an output control signal S2 for displaying the external input support screen image based on the recognized content of operation of the robot 5 and supplies the generated output control signal S2 to the instruction device 2.

In the example shown in FIG. 8, the output control unit 15 displays on the operation content display area 29 a guide sentence instructing that the control has switched to the second robot control (manual control) and the content (here, the object is to be moved to a predetermined position and then grasped by the first arm) of the operation to be executed by the robot 5. The output control unit 15 displays, on the workspace image displayed in the work space display field 26A, a bold circle frame 71 surrounding the target object to be worked, a broken-line circle frame 72 indicating the moving destination of the target object, the name (first arm and second arm) of each arm of the robot 5. By adding such a display in the workspace display field 26A, the output control unit 15 allows the operator referring to the text of the operation content display area 29 to suitably recognize the robot arm to be required for the work and the target object to be worked and its destination.

Here, the content of operation of the robot 5 shown in the operation descriptions display area 29 satisfy one or more conditions (also referred to as "sequence transition conditions") for transitioning to the subtask which follows the ongoing target external input specific subtask. The sequence transition conditions correspond to the conditions that indicate the end state (or the start state of the following subtask) of the target external input specific subtask, wherein the end state is assumed in the generated operation sequence Sr. A sequence transition condition in the example shown in FIG. 8 indicates that the first arm should be in a state of grasping the target object at a predetermined position. In this way, the output control unit 15 displays the guide sentence instructing the operation necessary to satisfy the sequence transition conditions in the operation content display area 29 to thereby suitably support the external input required to smoothly transition to the next subtask. The information displayed in the operation content display area 29 and the workspace display field 26A in FIG. 8 is an example of the external input support information.

As described above, according to the external input support screen image shown in FIG. 8, at the time of execution of the external input specific subtask in which the second robot control is required, it is possible to suitably support the operator to perform an appropriate external input.

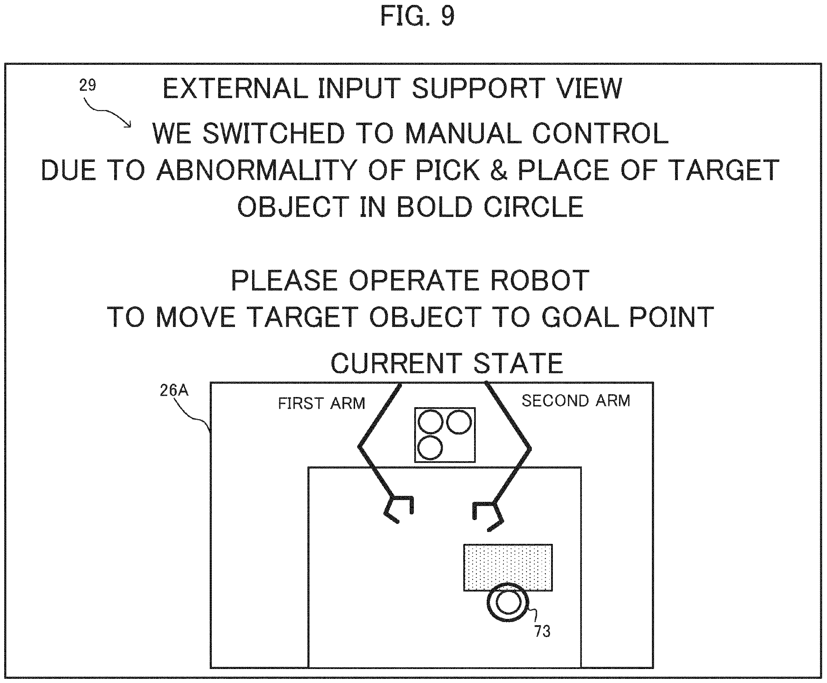

FIG. 9 shows a second display example of the external input support screen image when the switching mode from the first robot control to the second robot control by the switching determination unit 18 is the second embodiment. The output control unit 15 generates an output control signal S2 and transmits the output control signal S2 to the instruction device 2 thereby to display the external input support screen image shown in FIG. 9 on the instruction device 2. The external input support screen image shown in FIG. 9 mainly includes a workspace display field 26A and an operation content display area 29.

In the example shown in FIG. 9, one target object accidentally rolls over to the back of the obstacle, and the target object cannot be directly grasped by the robot arm. In this case, since the switching determination unit 18 has detected that the temporal and/or spatial deviation from the plan based on the operation sequence Sr has occurred, the switching determination unit 18 determines that continuation of the first robot control is unsuitable, and therefore transmits the switching command Sw to the robot control unit 17. Then, the robot control unit 17 shifts the control mode to the second robot control by the second robot control unit 172.

Then, as shown in FIG. 9, the output control unit 15 displays on the operation content display area 29 such a notification that the operation has shifted to the second robot control due to the occurrence of an abnormality with respect to pick-and-place of the target object, and that an external input for moving the target object to the goal point is necessary. Further, the output control unit 15 displays, on the image displayed in the workspace display field 26A, a bold circle frame 73 circling the target object to be worked on, the name (first arm, second arm) of each arm of the robot 5.

Thus, according to the external input support screen image shown in FIG. 9, when it becomes necessary to perform the second robot control due to occurrence of abnormality, it is possible to suitably support the operator to perform an appropriate external input.

Here, a supplementary description will be given of the operation of the robot 5 to be targeted in the second robot control. In FIG. 9, the output control unit 15 displays information instructing that the target object is to be moved to the goal point by the second robot control on the operation content display area 29 so that the operation of the robot 5 until the completion of the work on the target object is performed under the second robot control. However, the operation of the robot 5 to be targeted in the second robot control is not limited thereto.

For example, the output control unit 15 may display information prompting an external input corresponding to the ongoing sluggish subtask (also referred to as "stagnant subtask") in the operation content display area 29 so that only the operation relating to the stagnant subtask is performed under the second robot control. In the example shown in FIG. 9, since the subtask of grasping the target object close to the obstacle cannot be completed, the output control unit 15 may display information prompting the external input until the grasp of the target object in the operation content display area 29. Then, if the switching determination unit 18 detects that grasping the target object is performed under the second robot control, it transmits the switching command Sw instructing the switching from the second robot control to the first robot control to the robot control unit 17. Thereafter, the first robot control unit 171 of the robot control unit 17 executes the next subtask of the stagnant subtask.

In another example, a button for instructing the end of the second robot control is provided in the external input support screen image, and the switching determination unit 18 determines that it should terminate the second robot control when detecting the selection of the button. In this case, for example, the switching determination unit 18 transmits the switching command Sw instructing switching from the second robot control to the first robot control to the robot control unit 17 while giving instructions of newly generating the operation sequence Sr to the operation sequence generation unit 16. The first robot control unit 171 of the robot control unit 17 resumes the first robot control based on the operation sequence Sr newly generated by the operation sequence generation unit 16.

(8) Processing Flow

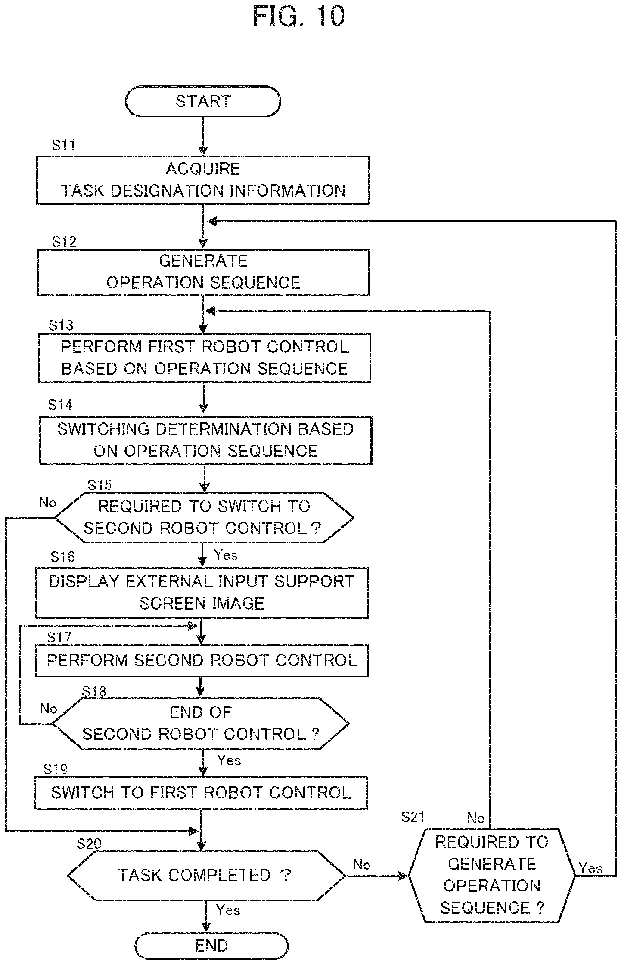

FIG. 10 is an example of a flowchart illustrating an outline of robot control process that is executed by the robot controller 1 in the first embodiment.

First, the robot controller 1 acquires the task designation information Ia (step S11). In this instance, for example, the output control unit 15 acquires the task designation information Ia by receiving the input signal S1 relating to the designation of the objective task. In another example, if the task designation information Ia is previously stored in the storage device 4 or the like, the robot controller 1 may acquire the task designation information Ia from the storage device 4 or the like.

The operation sequence generation unit 16 generates the operation sequence Sr which is the operation sequence of the robot 5, based on the task designation information Ia acquired at the step S11 and the measurement signal S4 (step S12). In this instance, the operation sequence generation unit 16 recognizes objects existing in the workspace in order to generate the operation sequence Sr and generates the operation sequence Sr that is necessary for the completion of the objective task indicated by the task designation information Ia.

Next, the first robot control unit 171 of the robot control unit 17 executes the first robot control based on the generated operation sequence Sr (step S13). In this instance, the first robot control unit 171 sequentially supplies the control signal S3 generated on the basis of the operation sequence Sr to the robot 5 and controls the robot 5 to operate according to the generated operation sequence Sr.

Next, the switching determination unit 18 makes a switching determination of the robot control based on the operation sequence Sr (step S14). In this case, for example, based on at least the operation sequence Sr, the switching determination unit 18 determines whether or not to switch from the first robot control to the second robot control in accordance with the first embodiment or the second embodiment described in the section "(6) Details of Switching Determination Unit".

If it is required to switch from the first robot control to the second robot control (step S15; Yes), the output control unit 15 displays, on the instruction device 2, the external input support screen image that indicates the content of the operation to be performed by the robot 5 according to the external input from the operator (Step S16). In this instance, based on the operation sequence Sr supplied from the operation sequence generation unit 16, the subtask information I4, and the state of the robot 5 supplied from the robot control unit 17, the output control unit 15 recognizes the content of the operation to be executed by the robot 5 according to the external input. Thereafter, the output control unit 15 generates the output control signal S2 for displaying the external input support screen image described above. Then, by supplying the generated output control signal S2 to the instruction device 2, the output control unit 15 displays the external input support screen image on the instruction device 2.

Then, the second robot control unit 172 of the robot control unit 17 executes the second robot control (step S17). In this instance, the second robot control unit 172 sequentially supplies the control signal S3 based on the input signal SI generated by the robot operation unit 24d of the instruction device 2. Thus, the robot 5 operates in accordance with the operator's manipulation.

Then, the switching determination unit 18 determines whether to terminate the second robot control (step S18). For example, if the ongoing subtask to be performed by the second robot control is determined to be completed (i.e., the sequence transition condition is satisfied), the switching determination unit 18 determines that the second robot control should be terminated. In this case, the subtask to be performed by the second robot control may be a set of multiple subtasks. In another example, if the switching determination unit 18 receives the input signal S1 corresponding to an explicit termination instruction of the second robot control by the operator, it determines that the second robot control should be terminated.

When the switching determination unit 18 determines that the second robot control should not be terminated (step S18; No), the second robot control unit 172 continues to execute the second robot control on the basis of the input signal S1 supplied from the instruction device 2 at step S17.

On the other hand, when the switching determination unit 18 determines that the second robot control should be terminated (step S18; Yes), the robot control unit 17 switches the control of the robot 5 from the second robot control to the first robot control (step S19). After the process at step S19, or after the determination at step S15 that the switching to the second robot control is not necessary, the robot controller 1 determines whether or not the objective task is completed (step S20). In this case, for example, the robot control section 17 of the robot controller 1 determines that the objective task has been completed if the output of the control signal S3 to the robot 5 based on the operation sequence Sr is completed (i.e., the control signal S3 ceases to be outputted). In another example, when the robot control unit 17 recognizes that the state of the target object(s) has reached the completion state based on the measurement signal S4, it determines that the objective task has been completed. When it is determined that the objective task has been completed (step S20; Yes), the robot controller 1 ends the process of the flowchart.

On the other hand, when it is determined that the objective task is not completed (step S20; No), the operation sequence generation unit 16 determines whether or not it is necessary to generate the operation sequence Sr (step S21). For example, if the operation sequence generation unit 16 executes the first robot control again after the switching to the second robot control based on the second embodiment (i.e., urgent switching to the second robot control based on the anomaly detection), it determines that it should newly generate the operation sequence Sr. On the other hand, when the robot controller 1 executes the first robot control again after the switching to the second robot control based on the first embodiment (i.e., planned switching to the second robot control), it determines that there is no need to newly generate the operation sequence Sr. In another example, if the ongoing subgoal is completed, the operation sequence generation unit 16 determines that it needs to generate the operation sequence Sr for executing the following subgoals (including the final goal).

Then, if the operation sequence generation unit 16 determines that the generation of the operation sequence Sr is required (step S21; Yes), it gets back to the process at step S12 to generate the operation sequence Sr. On the other hand, if the operation sequence generation unit 16 determines that the generation of the operation sequence Sr is not required (step S21; No), the operation sequence generation unit 16 gets back to the process at step S13 and then performs the first robot control based on the ongoing operation sequence Sr.

(9) Modifications

Next, a description will be given of modifications of the first example embodiment. The following modifications may be applied in any combination.

(First Modification)

Instead of or in addition to performing the control of displaying the information to support the external input by the operator in the second robot control on the external input support screen image, the robot controller 1 may perform audio output control of the information to support the external input by the operator in the second robot control. In this case, instead of displaying the external input support screen image shown in FIG. 8 or FIG. 9 on the instruction device 2, for example, the output control unit 15 of the robot controller 1 causes the instruction device 2 to output, by audio, the guidance with the guide sentence relating to the external input displayed on the operation content display area 29.

According to this modification, the robot controller 1 can suitably support the generation of the external input necessary for the second robot control.

(Second Modification)

The block configuration of the operation sequence generation unit 16 shown in FIG. 5 is an example, and various changes may be applied thereto.

For example, information on the candidates φ for the sequence of operations to be instructed to the robot 5 is stored in advance in the storage device 4, and based on the information, the operation sequence generation unit 16 executes the optimization process to be executed by the control input generation unit 35. Thus, the operation sequence generation unit 16 performs selection of the optimum candidate φ and determination of the control input of the robot 5. In this instance, the operation sequence generation unit 16 may not have a function corresponding to the abstract state setting unit 31, the target logical formula generation unit 32, and the time step logical formula generation unit 33 in generating the operation sequence Sr. Thus, information on the execution results from a part of the functional blocks in the operation sequence generation unit 16 shown in FIG. 5 may be stored in advance in the application information storage unit 41.

In another example, the application information includes design information such as a flowchart for designing the operation sequence Sr to complete the objective task in advance, and the operation sequence generation unit 16 may generate the operation sequence Sr by referring to the design information. For example, JP2017-39170A discloses a specific example of executing a task based on a pre-designed task sequence.

<Second Example Embodiment>

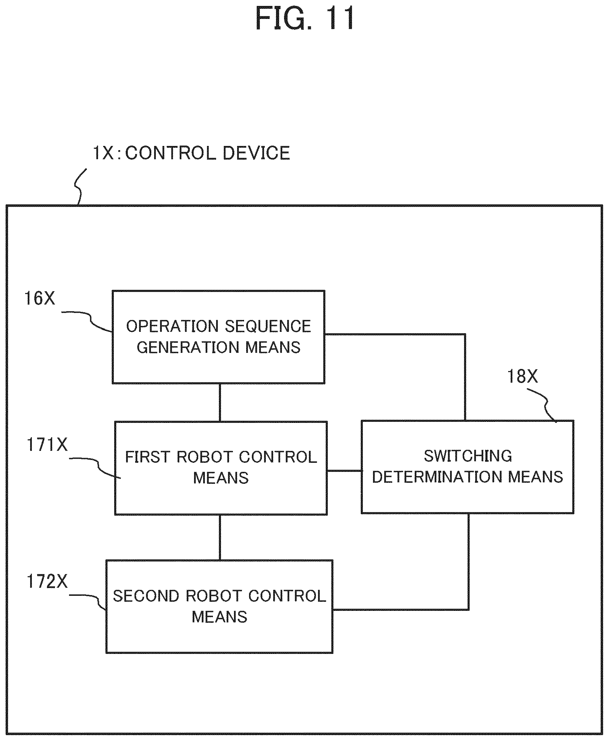

FIG. 11 shows a schematic configuration diagram of a control device 1X in the second example embodiment. The control device 1X mainly includes an operation sequence generation means 16X, a first robot control means 171X, a switching determination means 18X, and a second robot control means 172X. The control device 1X may include a plurality of devices. Examples of the controller 1X include the robot controller 1 in the first example embodiment.

The operation sequence generation means 16X is configured to generate an operation sequence of a robot. Examples of the operation sequence generation means 16X include the operation sequence generation unit 16 in the first example embodiment.

The first robot control means 171X is configured to perform a first robot control that is a control of the robot based on the operation sequence. Examples of the first robot control means 171X include a first robot control unit 171 in the first example embodiment.

The switching determination means 18X is configured, during execution of the first robot control, to determine, based on the operation sequence, whether or not to switch to a second robot control, which is a control of the robot based on an external input. Examples of the switching determination means 18X include the switching determination unit 18 in the first example embodiment.

The second robot control means 172X is configured, if it is determined by the switching determination means 18X that the switching is required, to perform the second robot control. Examples of the second robot control means 172X include the second robot control unit 172 in the first example embodiment.

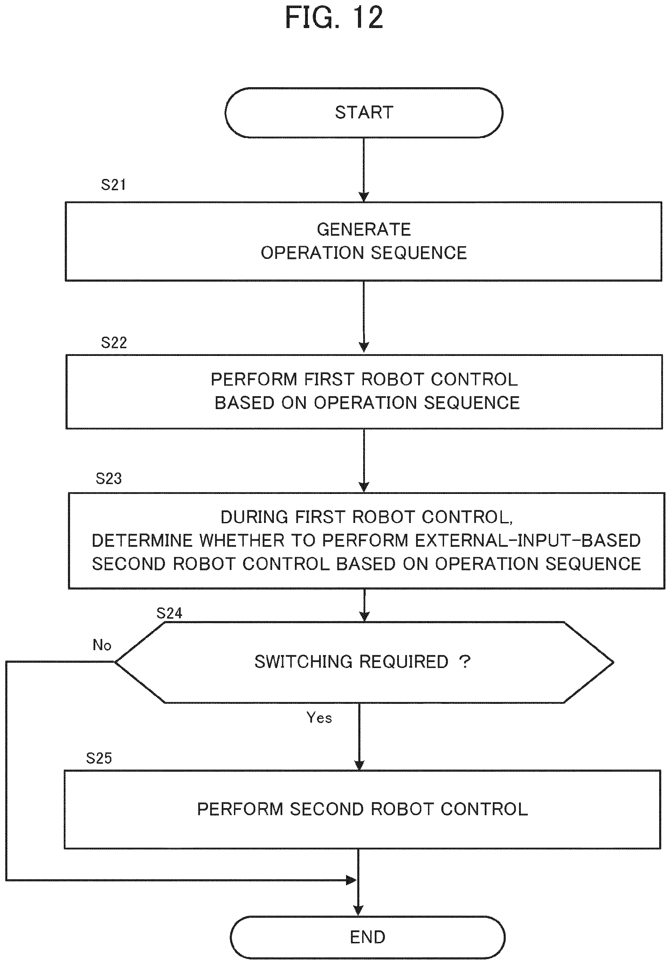

FIG. 12 is an example of a flowchart in the second example embodiment. The operation sequence generation means 16X generates an operation sequence of a robot (step S21). Then, the first robot control means 171X performs a first robot control that is a control of the robot based on the operation sequence. (step S22). During execution of the first robot control, the switching determination means 18X determines, based on the operation sequence, whether or not to switch to a second robot control which is a control of the robot based on an external input (step S23). If it is determined that the switching is required (step S24; Yes), the second robot control means 172X performs the second robot control (step S25). On the other hand, if it is determined that the switching is not required (step S24; No), the process of flowchart ends.

According to the second example embodiment, based on the operation sequence, the control device 1X switches to the second robot control based on the external input as required in execution of the first robot control, and can smoothly perform the objective task.

In the example embodiments described above, the program is stored by any type of a non-transitory computer-readable medium (non-transitory computer readable medium) and can be supplied to a control unit or the like that is a computer. The non-transitory computer-readable medium include any type of a tangible storage medium. Examples of the non-transitory computer readable medium include a magnetic storage medium (e.g., a flexible disk, a magnetic tape, a hard disk drive), a magnetic-optical storage medium (e.g., a magnetic optical disk), CD-ROM (Read Only Memory), CD-R, CD-R/W, a solid-state memory (e.g., a mask ROM, a PROM (Programmable ROM), an EPROM (Erasable PROM), a flash ROM, a RAM (Random Access Memory)). The program may also be provided to the computer by any type of a transitory computer readable medium. Examples of the transitory computer readable medium include an electrical signal, an optical signal, and an electromagnetic wave. The transitory computer readable medium can provide the program to the computer through a wired channel such as wires and optical fibers or a wireless channel.

The whole or a part of the example embodiments described above can be described as, but not limited to, the following Supplementary Notes.

[Supplementary Note 1]

A control device comprising:

an operation sequence generation means configured to generate an operation sequence of a robot;
a first robot control means configured to perform a first robot control that is a control of the robot based on the operation sequence;
a switching determination means configured, during execution of the first robot control, to determine, based on the operation sequence, whether or not to switch to a second robot control which is a control of the robot based on an external input; and
a second robot control means configured, if it is determined that the switching is required, to perform the second robot control.

[Supplementary Note 2]

The control device according to Supplementary Note 1,
wherein the switching determination means is configured, during the execution of the first robot control, to determine whether or not to switch to a second robot control, based on the operation sequence and an execution status of the operation of the robot.

[Supplementary Note 3]

The control device according to Supplementary Note 1 or 2,
wherein the switching determination means is configured, during the execution of the first robot control, to

calculate an amount of time deviation from a plan based on the operation sequence, based on the operation sequence and an execution status of the operation of the robot, and
determine whether or not to switch to a second robot control, based on the amount of the time deviation.

[Supplementary Note 4]

The control device according to any one of Supplementary Notes 1 to 3,
wherein the switching determination means is configured, during the execution of the first robot control, to

calculate an amount of spatial deviation from a plan based on the operation sequence, based on the operation sequence and an execution status of the operation of the robot, and
determine whether or not to switch to a second robot control, based on the amount of the spatial deviation.

[Supplementary Note 5]

The control device according to Supplementary Note 4,
wherein the switching determination means is configured to calculate the amount of the spatial deviation based on

a comparison between a predicted movement locus of the robot and a measured movement locus of the robot, or
a comparison between a predicted movement locus of a target object of work by the robot and a measured movement locus of the target object of the work.

[Supplementary Note 6]

The control device according to any one of Supplementary Notes 1 to 5,
wherein the switching determination means is configured to determine that the switching is required if it is determined during the execution of the first robot control that any one of operations constituting the operation sequence is not successfully completed.

[Supplementary Note 7]

The control device according to any one of Supplementary Notes 1 to 5,

wherein the operation sequence generation means is configured to sequentially generate, based on one or more intermediate states until completion of a task to be executed by the robot, a plural operation sequences necessary from start of the task to the completion of the task, and
wherein the switching determination means is configured to determine that the switching is required if any one of the plural operation sequences is not successfully completed.

[Supplementary Note 8]

The control device according to any one of Supplementary Notes 1 to 7,

wherein the operation sequence generation means is configured to generate the operation sequence including an operation of the robot in which the second robot control is required, and
wherein the switching determination means is configured to determine, in an execution timing of the operation in which the second robot control is required, that the switching is required.

[Supplementary Note 9]

The control device according to Supplementary Note 8,
wherein the first robot control means is configured to resume the first robot control if it is determined that the operation in which the second robot control is required is completed.

[Supplementary Note 10]

The control device according to any one of Supplementary Notes 1 to 9, further comprising
an output control means configured to display or output, by audio, external input support information for supporting the external input.

[Supplementary Note 11]

The control device according to Supplementary Note 10,
wherein the output control means is configured to display or output, by audio, the external input support information that is information regarding a content of the operation of the robot to be instructed by the external input.

[Supplementary Note 12]

The control device according to any one of Supplementary Notes 1 to 11,
wherein the operation sequence generation means is configured to comprise:

a logical formula conversion means configured to convert a task to be executed by the robot into a logical formula based on a temporal logic;
a time step logical formula generation means configured to generate, from the logical formula, a time step logical formula that is a logical formula representing a state for completing the task with respect to each time step; and
a subtask sequence generation means configured to generate, based on the time step logical formula, the operation sequence that is a sequence of subtasks to be executed by the robot.

[Supplementary Note 13]

The control device according to Supplementary Note 12,

wherein the operation sequence generation means is configured to further comprise
an abstract state setting means configured to set an abstract state, which is an abstract state of an object related to the task, as a proposition to be used in the logical formula.

[Supplementary Note 14]

A control method executed by a computer, the control method comprising:

generating an operation sequence of a robot;
performing a first robot control that is a control of the robot based on the operation sequence;
during execution of the first robot control, determining, based on the operation sequence, whether or not to switch to a second robot control which is a control of the robot based on an external input; and
if it is determined that the switching is required, performing the second robot control.

[Supplementary Note 15]

A storage medium storing a program executed by a computer, the program causing the computer to:

generate an operation sequence of a robot;
perform a first robot control that is a control of the robot based on the operation sequence;
during execution of the first robot control, determine, based on the operation sequence, whether or not to switch to a second robot control which is a control of the robot based on an external input; and
if it is determined that the switching is required, perform the second robot control.

While the invention has been particularly shown and described with reference to example embodiments thereof, the invention is not limited to these example embodiments. It will be understood by those of ordinary skilled in the art that various changes in form and details may be made therein without departing from the spirit and scope of the present invention as defined by the claims. In other words, it is needless to say that the present invention includes various modifications that could be made by a person skilled in the art according to the entire disclosure including the scope of the claims, and the technical philosophy. All Patent and Non-Patent Literatures mentioned in this specification are incorporated by reference in its entirety.

DESCRIPTION OF REFERENCE NUMERALS

1       Robot controller
1X      Control device
2       Instruction device
4       Storage device
5       Robot
7       Measurement device
41      Application information storage unit
100     Control system

**Claims**

1.  A control device comprising:

an operation sequence generation means configured to generate an operation sequence of a robot;
a first robot control means configured to perform a first robot control that is a control of the robot based on the operation sequence;
a switching determination means configured, during execution of the first robot control, to determine, based on the operation sequence, whether or not to switch to a second robot control which is a control of the robot based on an external input; and
a second robot control means configured, if it is determined that the switching is required, to perform the second robot control.

2.  The control device according to claim 1,
wherein the switching determination means is configured, during the execution of the first robot control, to determine whether or not to switch to a second robot control, based on the operation sequence and an execution status of the operation of the robot.

3. The control device according to claim 1 or 2,
   wherein the switching determination means is configured, during the execution of the first robot control, to

   calculate an amount of time deviation from a plan based on the operation sequence, based on the operation sequence and an execution status of the operation of the robot, and
   determine whether or not to switch to a second robot control, based on the amount of the time deviation.

4. The control device according to any one of claims 1 to 3,
   wherein the switching determination means is configured, during the execution of the first robot control, to

   calculate an amount of spatial deviation from a plan based on the operation sequence, based on the operation sequence and an execution status of the operation of the robot, and
   determine whether or not to switch to a second robot control, based on the amount of the spatial deviation.

5. The control device according to claim 4,
   wherein the switching determination means is configured to calculate the amount of the spatial deviation based on

   a comparison between a predicted movement locus of the robot and a measured movement locus of the robot, or
   a comparison between a predicted movement locus of a target object of work by the robot and a measured movement locus of the target object of the work.

6. The control device according to any one of claims 1 to 5,
   wherein the switching determination means is configured to determine that the switching is required if it is determined during the execution of the first robot control that any one of operations constituting the operation sequence is not successfully completed.

7. The control device according to any one of claims 1 to 5,

   wherein the operation sequence generation means is configured to sequentially generate, based on one or more intermediate states until completion of a task to be executed by the robot, a plural operation sequences necessary from start of the task to the completion of the task, and
   wherein the switching determination means is configured to determine that the switching is required if any one of the plural operation sequences is not successfully completed.

8. The control device according to any one of claims 1 to 7,

   wherein the operation sequence generation means is configured to generate the operation sequence including an operation of the robot in which the second robot control is required, and
   wherein the switching determination means is configured to determine, in an execution timing of the operation in which the second robot control is required, that the switching is required.

9. The control device according to claim 8,
   wherein the first robot control means is configured to resume the first robot control if it is determined that the operation in which the second robot control is required is completed.

10. The control device according to any one of claims 1 to 9, further comprising
    an output control means configured to display or output, by audio, external input support information for supporting the external input.

11. The control device according to claim 10,
    wherein the output control means is configured to display or output, by audio, the external input support information that is information regarding a content of the operation of the robot to be instructed by the external input.

12. The control device according to any one of claims 1 to 11,
    wherein the operation sequence generation means is configured to comprise:

a logical formula conversion means configured to convert a task to be executed by the robot into a logical formula based on a temporal logic;

a time step logical formula generation means configured to generate, from the logical formula, a time step logical formula that is a logical formula representing a state for completing the task with respect to each time step; and

a subtask sequence generation means configured to generate, based on the time step logical formula, the operation sequence that is a sequence of subtasks to be executed by the robot.

13. The control device according to claim 12,

wherein the operation sequence generation means is configured to further comprise

an abstract state setting means configured to set an abstract state, which is an abstract state of an object related to the task, as a proposition to be used in the logical formula.

14. A control method executed by a computer, the control method comprising:

generating an operation sequence of a robot;

performing a first robot control that is a control of the robot based on the operation sequence;

during execution of the first robot control, determining, based on the operation sequence, whether or not to switch to a second robot control which is a control of the robot based on an external input; and

if it is determined that the switching is required, performing the second robot control.

15. A storage medium storing a program executed by a computer, the program causing the computer to:

generate an operation sequence of a robot;

perform a first robot control that is a control of the robot based on the operation sequence;

during execution of the first robot control, determine, based on the operation sequence, whether or not to switch to a second robot control which is a control of the robot based on an external input; and

if it is determined that the switching is required, perform the second robot control.

# FIG. 1

100 : ROBOT CONTROL SYSTEM

FIG. 2A

FIG. 2B

# FIG. 3

APPLICATION INFORMATION

ABSTRACT STATE SPECIFICATION INFORMATION ⟿ I1

CONSTRAINT CONDITION INFORMATION ⟿ I2

OPERATION LIMIT INFORMATION ⟿ I3

SUBTASK INFORMATION ⟿ I4

ABSTRACT MODEL INFORMATION ⟿ I5

OBJECT MODEL INFORMATION ⟿ I6

⋮

# FIG. 4

# FIG. 5

FIG. 6

EP 4 219 091 A1

# FIG. 7

## TASK DESIGNATION VIEW 25

1. DESIGNATE TASK TYPE

| Pick and Place | ▽ |
|---|---|

2. DESIGNATE CONTENT OF TASK

· FIRST, CIRCLE TARGET OBJECTS & PRESS "DECIDE TARGET OBJECT"
· NEXT, CIRCLE DESTINATION OF TARGET OBJECTS & PRESS "DECIDE DESTINATION"

26  27e  27c  27b  27a  27d

28a

DECIDE TARGET
OBJECT

28b

DECIDE
DESTINATION

—— TARGET OBJECT    —·—·· DESTINATION

EP 4 219 091 A1

## FIG. 8

EXTERNAL INPUT SUPPORT VIEW

29

WE SWITCHED TO MANUAL CONTROL
PLEASE MOVE TARGET OBJECT IN BOLD CIRCLE TO
BROKEN LINE POSITION & GRASP BY FIRST ARM

CURRENT STATE

26A

FIRST ARM          SECOND ARM

72    71

EP 4 219 091 A1

# FIG. 9

EXTERNAL INPUT SUPPORT VIEW
29

WE SWITCHED TO MANUAL CONTROL
DUE TO ABNORMALITY OF PICK & PLACE OF TARGET
OBJECT IN BOLD CIRCLE

PLEASE OPERATE ROBOT
TO MOVE TARGET OBJECT TO GOAL POINT

CURRENT STATE

26A

FIRST ARM          SECOND ARM

73

EP 4 219 091 A1

# FIG. 10

```
                    ┌──────────────┐
                    │    START     │
                    └──────┬───────┘
                           │
S11    ┌───────────────────▼───────────────────┐
       │              ACQUIRE                   │
       │   TASK DESIGNATION INFORMATION         │
       └───────────────────┬───────────────────┘
                           │
S12    ┌───────────────────▼───────────────────┐
       │             GENERATE                   │
       │        OPERATION SEQUENCE              │
       └───────────────────┬───────────────────┘
                           │
S13    ┌───────────────────▼───────────────────┐
       │    PERFORM FIRST ROBOT CONTROL         │
       │    BASED ON OPERATION SEQUENCE         │
       └───────────────────┬───────────────────┘
                           │
S14    ┌───────────────────▼───────────────────┐
       │   SWITCHING DETERMINATION BASED        │
       │       ON OPERATION SEQUENCE            │
       └───────────────────┬───────────────────┘
                           │
S15         REQUIRED TO SWITCH TO       No
            SECOND ROBOT CONTROL ?
                           │ Yes
S16    ┌───────────────────▼───────────────────┐
       │  DISPLAY EXTERNAL INPUT SUPPORT        │
       │          SCREEN IMAGE                  │
       └───────────────────┬───────────────────┘
                           │
S17    ┌───────────────────▼───────────────────┐
       │   PERFORM SECOND ROBOT CONTROL         │
       └───────────────────┬───────────────────┘
                           │
S18              END OF                  No
            SECOND ROBOT CONTROL ?
                           │ Yes
S19    ┌───────────────────▼───────────────────┐
       │   SWITCH TO FIRST ROBOT CONTROL        │
       └───────────────────┬───────────────────┘
                           │
S20         TASK COMPLETED ?    No    S21  REQUIRED TO    No
                                           GENERATE
                           │ Yes          OPERATION       Yes
                    ┌──────▼───────┐      SEQUENCE ?
                    │     END      │
                    └──────────────┘
```

# FIG. 11

1X : CONTROL DEVICE

16X

OPERATION SEQUENCE
GENERATION MEANS

18X

171X

FIRST ROBOT CONTROL
MEANS

SWITCHING
DETERMINATION MEANS

172X

SECOND ROBOT CONTROL
MEANS

# FIG. 12

START

S21
```
GENERATE
OPERATION SEQUENCE
```

S22
```
PERFORM FIRST ROBOT CONTROL
BASED ON OPERATION SEQUENCE
```

S23
```
DURING FIRST ROBOT CONTROL,
DETERMINE WHETHER TO PERFORM EXTERNAL-INPUT-BASED
SECOND ROBOT CONTROL BASED ON OPERATION SEQUENCE
```

S24
No ← SWITCHING REQUIRED ?

Yes

S25
```
PERFORM SECOND ROBOT CONTROL
```

END

INTERNATIONAL SEARCH REPORT

| International application No. |
| --- |
| PCT/JP2020/036383 |

**A. CLASSIFICATION OF SUBJECT MATTER**
Int. Cl. B25J13/00(2006.01)i
FI: B25J13/00 Z

According to International Patent Classification (IPC) or to both national classification and IPC

**B. FIELDS SEARCHED**

Minimum documentation searched (classification system followed by classification symbols)
Int. Cl. B25J13/00

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2016-068161 A (TOYOTA MOTOR CORP.) 09 May 2016 | 1-4, 14-15 |
| Y | (2016-05-09), paragraphs [0004]-[0051], fig. 1-7 | 5-7, 10-11 |
| A | | 12-13 |
| Y | JP 07-237106 A (NIPPON STEEL CORP.) 12 September 1995 (1995-09-12), paragraphs [0012]-[0026], fig. 1, 2 | 5-7, 10-11 |
| X | JP 2003-311661 A (HITACHI, LTD.) 05 November 2003 | 1, 8-9, 14-15 |
| Y | (2003-11-05), paragraphs [0020]-[0069], fig. 1-15 | 10-11 |
| A | | 12-13 |
| A | JP 2017-039170 A (LIFE ROBOTICS CO., LTD.) 23 February 2017 (2017-02-23), paragraphs [0005]-[0105], fig. 1-10 | 12-13 |

☐ Further documents are listed in the continuation of Box C.      ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 01.12.2020 | 08.12.2020 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

INTERNATIONAL SEARCH REPORT
Information on patent family members

International application No.

PCT/JP2020/036383

| Patent Documents referred to in the Report | Publication Date | Patent Family | Publication Date |
|---|---|---|---|
| JP 2016-068161 A | 09.05.2016 | (Family: none) | |
| JP 07-237106 A | 12.09.1995 | (Family: none) | |
| JP 2003-311661 A | 05.11.2003 | (Family: none) | |
| JP 2017-039170 A | 23.02.2017 | (Family: none) | |

Form PCT/ISA/210 (patent family annex) (January 2015)

**REFERENCES CITED IN THE DESCRIPTION**

**Patent documents cited in the description**

- JP 2011093062 A
- JP 2016068161 A
- JP 2017039170 A